# EUROPEAN PATENT APPLICATION

(11) **EP 4 358 187 A1**
(43) Date of publication of application: **24.04.2024**
(21) Application number: 22934209.2
(22) Date of filing: 31.03.2022
(51) Int. Cl.: H01M 4/58

(54) **POSITIVE ELECTRODE PLATE, SECONDARY BATTERY, BATTERY MODULE, BATTERY PACK, AND ELECTRIC APPARATUS**

(71) Applicant: Contemporary Amperex Technology Co., Limited, Ningde, Fujian 352100 (CN)
(72) Inventor: JI, Cheng, Ningde, Fujian 352100 (CN); LI, Baiqing, Ningde, Fujian 352100 (CN)
(74) Representative: Gong, Jinping
(86) International application number: PCT/CN2022/084464
(87) International publication number: WO 2023/184367

(57) **Abstract**

The present application provides a positive electrode plate, a secondary battery, a battery module, a battery pack, and a power consuming device; the positive electrode plate comprises a positive electrode current collector and positive electrode film layers having a single-layer or multi-layer structure provided on at least one surface of the positive electrode current collector; when the positive electrode film layers have a single-layer structure, at least one of the positive electrode film layers comprises a first positive electrode active material and a second positive electrode active material selected from LiFePO₄, carbon-coated LiFePO₄, LiFe_{b}D_{c}PO₄ and carbon-coated LiFe_{b}D_{c}PO₄; and/or when the positive electrode film layers have a multi-layer structure, at least one layer of the at least one of the positive electrode film layers comprises the first and second positive electrode active materials; and the first positive electrode active material comprises an inner core containing Li₁₊ₓMn_{1-y}A_{y}P_{1-z}R_{z}O₄, a first coating layer containing pyrophosphate and phosphate, and a second coating layer containing a carbon element. The secondary battery made of the positive electrode plate of the present application has high energy density, high rate performance, good kinetic performance, long low-temperature cycle life, and high low-temperature cycling capacity retention rate.

## Description

### Technical Field

The present application relates to the technical field of secondary batteries, and in particular, to a positive electrode plate, a secondary battery, a battery module, a battery pack, and a power consuming device.

### Background Art

In recent years, with the increasing application range, secondary batteries are widely used in energy storage power systems such as hydraulic power, thermal power, wind power, and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc. The existing lithium manganese iron phosphate causes the secondary batteries to have poorer kinetic performance and lower cell rate performance, which cannot meet the needs of power batteries. Though the secondary batteries, prepared from the existing lithium iron phosphate as a positive electrode active material, have excellent cycling stability and safety, due to the existence of one-dimensional lithium ion channels inside the secondary batteries and the existence of both an LiFePO₄ phase and an FePO₄ phase during a charging and discharging process of the secondary batteries, the internal phase change resistance of the material during the charging and discharging process is increased, resulting in poor kinetic performance, low cell rate performance, short low-temperature cycle life, and low low-temperature capacity retention rate of the secondary batteries.

### Summary of the Invention

The present application is made in view of the above topics, and aims to provide a positive electrode plate, a secondary battery, a battery module, a battery pack, and a power consuming device, to solve the problems of low energy density, poor kinetic performance, low rate performance, short low-temperature cycle life, and low low-temperature cycling capacity retention rate of the secondary battery prepared from the existing positive electrode active material.

In order to achieve the above object, a first aspect of the present application provides a positive electrode plate comprising a positive electrode current collector and positive electrode film layers provided on at least one surface of the positive electrode current collector; wherein the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of - 0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

Thus, the applicants have unexpectedly found that: a first positive electrode active material can be obtained by simultaneously doping at the Mn site and the P site of the compound LiMnPO₄ with a specific element at a specific amount and coating the surface of the compound with two layers, which can greatly reduce the dissolution of transition metals and the oxygen activity on the particle surface, promote the migration of lithium ions, improve the electrical conductivity and desolvation performance of the material, improve the rate performance of the battery, improve the cycling performance and high-temperature performance of the secondary battery, and reduce the corrosion to the active material by the electrolyte solution.

The present application, by mixing the first positive electrode active material and the second positive electrode active material for use to complement the advantages of the two materials, improves the energy density of the secondary battery, meanwhile making the secondary battery have excellent kinetic performance, rate performance, low-temperature cycle life and low-temperature cycling capacity retention rate.

A second aspect of the present application further provides a positive electrode plate comprising a positive electrode current collector and positive electrode film layers provided on at least one surface of the positive electrode current collector; wherein at least one of the positive electrode film layers has a multi-layer structure, and any of the positive electrode film layers having a multi-layer structure comprises in different layers a first positive electrode active material having a core-shell structure and a second positive electrode active material, respectively; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of -0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1; and optionally, any of the positive electrode film layers having a multi-layer structure comprises in adjacent layers the first positive electrode active material and the second positive electrode active material, respectively.

Thus, the first positive electrode active material can greatly reduce the dissolution of transition metals and the oxygen activity on the particle surface, promote the migration of lithium ions, improve the electrical conductivity and desolvation performance, improve the rate performance of the battery, improve the cycling performance and high-temperature performance of the secondary battery, and also reduce corrosion to the active material by the electrolyte solution.

The present application, by combining the first positive electrode active material and the second positive electrode active material for use to complement the advantages of the two materials, improves the energy density of the secondary battery, meanwhile making the secondary battery have excellent rate performance, kinetic performance, low-temperature cycle life and low-temperature cycling capacity retention rate.

A third aspect of the present application further provides a positive electrode plate comprising a positive electrode current collector and a positive electrode film layer A and a positive electrode film layer B provided on the two surfaces of the positive electrode current collector, respectively; wherein the positive electrode film layer A and the positive electrode film layer B each independently have a single-layer structure or a multi-layer structure; at least one layer of the positive electrode film layer A contains a first positive electrode active material having a core-shell structure, and at the same time, at least one layer of the positive electrode film layer B comprises a second positive electrode active material; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of - 0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

Thus, the first positive electrode active material can greatly reduce the dissolution of transition metals and the oxygen activity on the particle surface, promote the migration of lithium ions, improve the electrical conductivity and desolvation performance, improve the rate performance of the battery, improve the cycling performance and high-temperature performance of the secondary battery, and also reduce corrosion to the active material by the electrolyte solution.

The present application, by combining the first positive electrode active material and the second positive electrode active material for use to complement the advantages of the two materials, improves the energy density of the secondary battery, meanwhile making the secondary battery have excellent rate performance, kinetic performance, low-temperature cycle life and low-temperature cycling capacity retention rate.

Unless otherwise stated, in the chemical formula Li₁₊ₓMn_{1-y}A_{y}P_{1-z}R_{z}O₄, when A is a combination of at least two elements, the above definition of the numerical range of y not only represents a definition of the stoichiometric number of each element as A, but also represents a definition of the sum of the stoichiometric numbers of the elements as A. For example, when A is a combination of at least two elements of A1, A2... and An, the stoichiometric numbers y1, y2... and yn of each of A1, A2... and An each fall within the numerical range of y defined in the present application, and the sum of y1, y2... and yn also falls within this numerical range. Similarly, when R is a combination of at least two elements, the definitions of the numerical ranges of the stoichiometric numbers of R in the present application also have the above meanings.

Unless otherwise stated, in the chemical formula LiFe_{b}D_{c}PO₄, when D is a combination of at least two elements, the above definition of the numerical range of c not only represents a definition of the stoichiometric number of each element as D, but also represents a definition of the sum of the stoichiometric numbers of the elements as D. For example, when D is a combination of at least two elements of D1, D2... and Dn, the stoichiometric numbers c1, c2... and cn of each of D1, D2... and Dn each fall within the numerical range of c defined in the present application, and the sum of c1, c2... and cn also falls within this numerical range.

In any embodiment of the first aspect to the third aspect, in the second positive electrode active material, the mass of carbon accounts for 0.1% - 4% of the mass of the carbon-coated LiFePO₄; and/or the mass of carbon accounts for 0.1 % - 4% of the mass of the carbon-coated LiFe_{b}D_{c}PO₄. The use of the second positive electrode active material with the mass content of carbon described above can further ensure that the secondary battery has excellent rate performance, kinetic performance and low-temperature cycling performance, and has higher energy density.

In any embodiment of the first aspect to the third aspect, the mass ratio of the first positive electrode active material to the second positive electrode active material is 1 : 7 - 7 : 1, optionally 1 : 4 - 4 : 1, and further optionally 1 : 3 - 3 : 1, such as 1 : 7, 1 : 5, 1 : 3, 1 : 2, 3 : 5, 1 : 1, 5 : 3, 2 : 1, 3 : 1, 5 : 1, and 7 : 1. The secondary battery is guaranteed to have higher energy density, excellent kinetic performance, excellent rate performance, long low-temperature cycle life, and higher low-temperature cycling capacity retention rate, and to reduce interface side reactions.

In any embodiment of the first aspect to the third aspect, in the first positive electrode active material, A comprises one or more elements selected from Zn, Fe, Ti, V, Ni, Co and Mg; and optionally, A comprises at least two elements selected from Fe, Ti, V, Ni, Co and Mg. By selecting the doping elements within the above ranges, it is beneficial to an enhanced doping effect.For one thing, the lattice change rate is further reduced, thereby inhibiting the dissolution of manganese and reducing the consumption of an electrolyte solution and active lithium. For another, it is also beneficial to further reducing the surface oxygen activity and the interface side reactions between the positive electrode active material and the electrolyte solution, thereby improving the cycling performance and high-temperature storage performance of the battery.

In any embodiment of the first aspect to the third aspect, x is selected from a range of -0.100-0.006. By selecting the value of x within this range, the kinetic performance of the first positive electrode active material can be further improved.

In any embodiment of the first aspect to the third aspect,y is selected from a range of 0.1-0.4. By selecting the value of y within this range, the gram capacity and rate performance of the first positive electrode active material can be further improved.

In any embodiment of the first aspect to the third aspect, M and X independently comprise one or more elements selected from Li and Fe.

In any embodiment of the first aspect to the third aspect, the ratio of y to 1-y is selected from 1 : 10 to 10 : 1, optionally 1 : 4 to 1 : 1. Here, y denotes the sum of the stoichiometric numbers of the Mn-site doping elements. When the above conditions are satisfied, the energy density and cycling performance of the secondary battery made of the positive electrode plate can be further improved.

In any embodiment of the first aspect to the third aspect, the ratio of z to 1-z is selected from 1 : 999 to 1 : 9, optionally 1 : 499 to 1 : 249. Here, z denotes the sum of the stoichiometric numbers of the P-site doping elements. When the above conditions are satisfied, the energy density and cycling performance of the secondary battery made of the positive electrode plate can be further improved.

In any embodiment of the first aspect to the third aspect, in the first positive electrode active material, the first coating layer has an interplanar spacing of the phosphate of 0.345-0.358 nm, and an angle of the crystal direction (111) of 24.25° - 26.45°; and the first coating layer has an interplanar spacing of the pyrophosphate of 0.293-0.326 nm, and an angle of the crystal direction (111) of 26.41° - 32.57°.

When the interplanar spacing and angle of the crystal direction (111) of the phosphate and pyrophosphate in the first coating layer are within the above ranges, the impurity phase in the coating layer can be effectively avoided, thereby improving the gram capacity of the material and the improving cycling performance and rate performance of the secondary battery.

In any embodiment of the first aspect to the third aspect, in the first positive electrode active material, the coating amount of the first coating layer is greater than 0 wt% and less than or equal to 7 wt%, optionally 4-5.6 wt%, based on the weight of the inner core.

When the coating amount of the first coating layer is within the above ranges, the dissolution of manganese can be further inhibited, and at the same time, the transport of lithium ions can be further promoted. In addition, the following situations can be effectively avoided: if the coating amount of the first coating layer is too small, it may lead to insufficient inhibition of the dissolution of manganese by pyrophosphate, and non-significant improvement of lithium ion transport performance; and if the coating amount of the first coating layer is too large, it may cause the coating layer to be too thick, increase the impedance of the battery, and affect the kinetic performance of the battery.

In any embodiment of the first aspect to the third aspect, in the first positive electrode active material, the weight ratio of pyrophosphate to phosphate in the first coating layer is 1 : 3 to 3 : 1, optionally 1 : 3 to 1 : 1.

The proper ratio of pyrophosphate to phosphate is conducive to giving full play to the synergistic effect of the two. In addition, the following situations can be effectively avoided: if there is too much pyrophosphate and too little phosphate, it may lead to increased battery impedance; and if there is too much phosphate and too little pyrophosphate, the effect of inhibiting the dissolution of manganese will not be significant.

In any embodiment of the first aspect to the third aspect, in the first positive electrode active material, the pyrophosphate and the phosphate each independently have a crystallinity of 10% to 100%, optionally 50% to 100%.

In the first coating layer of the lithium manganese phosphate positive electrode active material of the present application, the pyrophosphate and the phosphate, which have a certain crystallinity, are conducive to keeping the structure of the first coating layer stable and reducing the lattice defects. For one thing, it is conducive to giving full play to the effect of pyrophosphate on the prevention of the dissolution of manganese; for another, it is also beneficial for phosphate to reduce the content of lithium impurities on the surface and the surface oxygen valence state, thereby reducing the interface side reactions between the positive electrode material and the electrolyte solution, reducing the consumption of the electrolyte solution, and improving the cycling performance and safety performance of the secondary battery.

In any embodiment of the first aspect to the third aspect, in the first positive electrode active material, the coating amount of the second coating layer is greater than 0 wt% and less than or equal to 6 wt%, optionally 3-5 wt%, based on the weight of the inner core.

The carbon-containing layer as the second coating layer can play a "barrier" function to avoid direct contact between the first positive electrode active material and the electrolyte solution, thereby reducing the corrosion to the active material by the electrolyte solution and improving the safety performance of the battery at a high temperature. Moreover, the carbon-containing layer has stronger electrical conductivity, which can reduce the internal resistance of the battery, thereby improving the kinetic performance of the secondary battery. However, since the gram capacity of the carbon material is low, if the amount of the second coating layer is too large, the overall gram capacity of the positive electrode active material may be reduced. Thus, when the coating amount of the second coating layer is within the above ranges, the kinetic performance and safety performance of the secondary battery can be further improved, without compromising the gram capacity of the positive electrode active material.

In any embodiment of the first aspect to the third aspect, the Li/Mn antisite defect concentration of the first positive electrode active material is 4% or less, optionally 2% or less. In the first positive electrode active material of the present application, the Li/Mn antisite defect means that the positions of Li⁺ and Mn²⁺ have been exchanged in the LiMnPO₄ lattices. Since the Li⁺ transport channel is a one-dimensional channel, it is difficult for Mn²⁺ to migrate in the Li⁺ transport channel. Therefore, the Mn²⁺ antisite defect will prevent the transport of Li⁺. The gram capacity and rate performance of LiMnPO₄ can be improved by controlling the Li/Mn antisite defect concentration at a low level.

In any embodiment of the first aspect to the third aspect, the lattice change rate of the first positive electrode active material is 6% or less, optionally 4% or less. The process of lithium intercalation-deintercalation of LiMnPO₄ is a two-phase reaction. The interfacial stress of the two phases is determined by the lattice change rate. The smaller the lattice change rate is, the smaller the interfacial stress is, and thus the easier Li⁺ transport is. Therefore, reducing the lattice change rate of the inner core will be beneficial to enhancing the Li⁺ transport ability, thereby improving the rate performance of the secondary battery.

In any embodiment of the first aspect to the third aspect, the surface oxygen valence state of the first positive electrode active material is -1.88 or less, optionally -1.98 to -1. 88. This is because that the higher the valence state of oxygen in the compound is, the stronger the ability to obtain electrons is, that is, the stronger the oxidability is. However, in the first positive electrode active material of the present application, by controlling the oxygen surface valence state at a lower level, the reactivity of the surface of the positive electrode material can be reduced, and the interface side reactions between the positive electrode material and the electrolyte solution can be reduced, thereby improving the cycling performance and high-temperature storage performance of the secondary battery.

In any embodiment of the first aspect to the third aspect, the compacted density of the first positive electrode active material under 3 tons (T) is not less than 2.0 g/cm³, optionally not less than 2.2 g/cm³. The higher the compacted density of the first positive electrode active material is, that is, the greater the weight of the active material per unit volume is, the more conducive to improving the volumetric energy density of the secondary battery it is.

In any embodiment of the first aspect to the third aspect, the sum of the mass of the first positive electrode active material and the second positive electrode active material accounts for 88% - 98.7% of the mass of the positive electrode plate. The secondary battery is further guaranteed to have excellent rate performance, kinetic performance and low-temperature cycling performance, and to have higher energy density.

A fourth aspect of the present application provides a secondary battery, comprising a positive electrode plate according to any one of the first aspect to the third aspect of the present application.

A fifth aspect of the present application provides a battery module comprising a secondary battery of the fourth aspect of the present application.

A sixth aspect of the present application provides a battery pack comprising a battery module of the fifth aspect of the present application.

A seventh aspect of the present application provides a power consuming device, comprising at least one selected from a secondary battery of the fourth aspect of the present application, a battery module of the fifth aspect of the present application and a battery pack of the sixth aspect of the present application.

### Brief Description of the Drawings

FIG. 1 is a schematic diagram of a first positive electrode active material having a core-shell structure according to an embodiment of the present application.
FIG. 2 is a schematic diagram of a secondary battery according to an embodiment of the present application.
FIG. 3 is an exploded view of a secondary battery according to an embodiment of the present application as shown in FIG. 2.
FIG. 4 is a schematic diagram of a battery module according to an embodiment of the present application.
FIG. 5 is a schematic diagram of a battery pack according to an embodiment of the present application.
FIG. 6 is an exploded view of a battery pack according to an embodiment of the present application as shown in FIG. 5.
FIG. 7 is a schematic diagram of a power consuming device using a secondary battery as a power source according to an embodiment of the present application.
FIG. 8 is a schematic diagram of the structure of a battery made of a positive electrode plate P1 according to the present application.
FIG. 9 is a schematic diagram of the structure of a battery made of a positive electrode plate P2 according to the present application.
FIG. 10 is a schematic diagram of the structure of a battery made of a positive electrode plate P3 according to the present application.
FIG. 11 is a schematic diagram of the structure of a battery made of the positive electrode plate P8 according to the present application.
FIG. 12 is a schematic diagram of the structure of a battery made of a positive electrode plate P10 according to the present application.
FIG. 13 is a schematic diagram of the structure of a battery made of a positive electrode plate P11 according to the present application.
FIG. 14 is a schematic diagram of the structure of a battery made of a positive electrode plate P12 according to the present application.
FIG. 15 is a schematic diagram of the structure of a battery made of a positive electrode plate P17 according to the present application.
FIG. 16 is a schematic diagram of the structure of a battery made of a positive electrode plate P18 according to the present application.
FIG. 17 is a schematic diagram of the structure of a battery made of a positive electrode plate P23 according to the present application.
FIG. 18 is a schematic diagram of the structure of a battery made of a positive electrode plate P24 according to the present application.
FIG. 19 is a schematic diagram of the structure of a battery made of a positive electrode plate P26 according to the present application.
FIG. 20 is a schematic diagram of the structure of a battery made of a positive electrode plate P27 according to the present application.

### List of reference signs:

1 battery pack; 2 upper box body; 3 lower box body; 4 battery module; 5 secondary battery; 51 housing; 52 electrode assembly; 53 top cover assembly; 11 inner core; 12 first coating layer; 13 second coating layer.

### Detailed Description of Embodiments

Hereinafter, the embodiments of the positive electrode plate, secondary battery, battery module, battery pack and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the implementations and optional implementations of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be carried out sequentially or randomly, preferably sequentially. For example, the method comprising steps (a) and (b) indicates that the method may comprise steps (a) and (b) carried out sequentially, and may also comprise steps (b) and (a) carried out sequentially. For example, reference to "the method may further comprise step (c)" indicates that step (c) may be added to the method in any order, e.g., the method may comprise steps (a), (b) and (c), steps (a), (c) and (b), or steps (c), (a) and (b).

The terms "comprise" and "include" mentioned in the present application are open-ended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

Unless otherwise stated, in the present application, the median particle size Dv₅₀ refers to a particle size corresponding to a cumulative volume distribution percentage of the positive electrode active material reaching 50%. In the present application, the median particle size Dv₅₀ of the positive electrode active material may be determined by using a laser diffraction particle size analysis method. For example, the determination may be carried out with reference to the standard GB/T 19077-2016 using a laser particle size analyzer (e.g., Malvern Master Size 3000).

Unless otherwise specified, in the present application, the term "coating layer" refers to a material layer coating the inner core, and the material layer can completely or partially coat the inner core, and the use of "coating layer" is only for ease of description, and is not intended to limit the present application. Likewise, the term "thickness of the coating layer" refers to the thickness of the material layer coating the inner core in the radial direction of the inner core.

Unless otherwise stated, in the present application, the term "source" refers to a compound that is the source of a certain element. As an example, the types of "source" include, but are not limited to, carbonates, sulfates, nitrates, elementary substances, halides, oxides and hydroxides, etc.

### [Secondary battery]

A secondary battery, also known as a rechargeable battery or an accumulator, refers to a battery of which active materials can be activated by means of charging for reuse of the battery after the battery is discharged.

Generally, the secondary battery comprises a positive electrode plate, a negative electrode plate, a separator and an electrolyte solution. During a charging and discharging process of the battery, active ions (e.g., lithium ions) are intercalated and de-intercalated back and forth between the positive electrode plate and the negative electrode plate. The separator is provided between the positive electrode plate and the negative electrode plate, and mainly prevents positive and negative electrodes from short-circuiting and enables the active ions to pass through. The electrolyte solution is provided between the positive electrode plate and the negative electrode plate and mainly functions for active ion conduction.

### [Positive electrode plate]

The embodiment of the first aspect of the present application provides a positive electrode plate comprising a positive electrode current collector and positive electrode film layers provided on at least one surface of the positive electrode current collector; wherein the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of -0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

It should be noted that: when the positive electrode plate comprises two positive electrode film layers, "the positive electrode film layers having a single-layer structure or a multi-layer structure" means that the two positive electrode film layers each independently have a single-layer structure or a multi-layer structure; "when the positive electrode film layers have a single-layer structure" means that when one or both of the positive electrode film layers have a single-layer structure; and "when the positive electrode film layers have a multiple-layer structure" means that when one or both of the positive electrode film layers have a multi-layer structure.

The first positive electrode active material of the present application has a core-shell structure having two coating layers, wherein the inner core comprises Li₁₊ₓMn_{1-y}A_{y}P_{1-z}R_{z}O₄. In the inner core, the element A doped at the manganese site of lithium manganese phosphate facilitates to reduce the lattice change rate of the lithium manganese phosphate during the process of lithium intercalation-deintercalation, improve the structural stability of the lithium manganese phosphate positive electrode material, greatly reduce the dissolution of manganese, and reduce the oxygen activity on the particle surface. The element R doped at the phosphorus site facilitates to change the difficulty of the change of the Mn-O bond length, thereby reducing the migration barrier of lithium ions, promoting the migration of lithium ions, and improving the rate performance of the secondary battery. The first coating layer of the first positive electrode active material of the present application comprises pyrophosphate and phosphate. Due to the high migration barrier (>1 eV) of transition metals in pyrophosphate, the dissolution of the transition metals can be effectively inhibited. The phosphate has an excellent lithium ion conductivity, and can reduce the content of lithium impurities on the surface. In addition, since the second coating layer is a carbon-containing layer, the electrical conductivity and desolvation ability of LiMnPO₄ can be effectively improved. In addition, the "barrier" effect of the second coating layer can further hinder the migration of manganese ions into the electrolyte solution and reduce the corrosion of the active material by the electrolyte solution. Therefore, the first positive electrode active material of the present application, by specific element doping and surface coating on lithium manganese phosphate, can effectively inhabit the dissolution of Mn in the process of lithium intercalation-deintercalation, and at the same time promote the migration of lithium ions, thereby improving the rate performance of the cell and increasing the cycling performance and high-temperature performance of the secondary battery. It should be pointed out that, the positions of the main characteristic peaks of the first positive electrode active material in the present application is basically consistent with those before doping LiMnPO₄, indicating that doped lithium manganese phosphate positive electrode active material has no impurity phase, and the improvement of the performance of the secondary battery mainly results from element doping, not the impurity phase.

The present application, by mixing the first positive electrode active material and the second positive electrode active material for use to complement the advantages of the two materials, improves the energy density of the secondary battery; and the internal lattice structure skeletons of the first positive electrode active material and the second positive electrode active material are stable. During the charging and discharging process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

In some embodiments of the first aspect, a positive electrode film layer C and a positive electrode film layer D are respectively provided on the two surfaces of the positive electrode current collector, the positive electrode film layer C has a multi-layer structure, the positive electrode film layer D has a single-layer structure, and at least one layer of the positive electrode film layer C comprises both a first positive electrode active material and a second positive electrode active material; optionally, the positive electrode film layer D comprises one or both of a first positive electrode active material and a second positive electrode active material; and optionally, the remaining layer(s) in the positive electrode film layer C comprise(s) a first positive electrode active material or a second positive electrode active material.

In some embodiments of the first aspect, a positive electrode film layer C and a positive electrode film layer D are respectively provided on the two surfaces of the positive electrode current collector, the positive electrode film layer C has a multi-layer structure, the positive electrode film layer D has a single-layer structure, and the positive electrode film layer D comprises both a first positive electrode active material and a second positive electrode active material; and optionally, any layer in the positive electrode film layer C comprises a first positive electrode active material or a second positive electrode active material.

In some embodiments of the first aspect, the two surfaces of the positive electrode current collector are respectively provided with positive electrode film layers thereon, wherein each positive electrode film layer has a multi-layer structure, and at least one layer of each positive electrode film layer comprises both a first positive electrode active material and a second positive electrode active material; and optionally, the remaining layer(s) in the positive electrode film layer comprise(s) a first positive electrode active material or a second positive electrode active material.

The embodiment of the second aspect of the present application provides a positive electrode plate comprising a positive electrode current collector and positive electrode film layers provided on at least one surface of the positive electrode current collector; at least one of the positive electrode film layers has a multi-layer structure, and any of the positive electrode film layers having a multi-layer structure comprises in different layers a first positive electrode active material having a core-shell structure and a second positive electrode active material, respectively; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of -0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1; and optionally, any of the positive electrode film layers having a multi-layer structure comprises in adjacent layers the first positive electrode active material and the second positive electrode active material, respectively.

The first positive electrode active material of the present application can greatly reduce the dissolution of transition metals and the oxygen activity on the particle surface, promote the migration of lithium ions, improve the electrical conductivity and desolvation performance, improve the rate performance of the battery, improve the cycling performance and high-temperature performance of the secondary battery, and reduce corrosion to the active material by the electrolyte solution.

The present application, by mixing the first positive electrode active material and the second positive electrode active material for use to complement the advantages of the two materials, improves the energy density of the secondary battery; and the internal lattice structure skeletons of the first positive electrode active material and the second positive electrode active material are stable. During the charging and discharging process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

In some embodiments of the second aspect, the two surfaces of the positive electrode current collector are respectively provided with positive electrode film layers thereon, wherein each positive electrode film layer has a multi-layer structure, and two adjacent layers in each positive electrode film layer comprise a first positive electrode active material and a second positive electrode active material, respectively.

In some embodiments of the second aspect, a positive electrode film layer E and a positive electrode film layer F are provided on the two surfaces of the positive electrode current collector, respectively, the positive electrode film layer E has a multi-layer structure, the positive electrode film layer F has a single-layer structure, and two adjacent layers in the positive electrode film layer E comprise a first positive electrode active material and a second positive electrode active material, respectively; and optionally, the remaining layer(s) in the positive electrode film layer E and the positive electrode film layer F comprise(s) a first positive electrode active material or a second positive electrode active material.

The embodiment of the third aspect of the present application provides a positive electrode plate comprising a positive electrode current collector and a positive electrode film layer A and a positive electrode film layer B provided on the two surfaces of the positive electrode current collector, respectively; the positive electrode film layer A and the positive electrode film layer B each independently have a single-layer structure or a multi-layer structure; at least one layer of the positive electrode film layer A contains a first positive electrode active material having a core-shell structure, and at the same time, at least one layer of the positive electrode film layer B comprises a second positive electrode active material; the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from a range of -0.100-0.100; y is selected from a range of 0.001-0.500; z is selected from a range of 0.001-0.100; and M and X independently comprise one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

The first positive electrode active material of the present application can greatly reduce the dissolution of transition metals and the oxygen activity on the particle surface, promote the migration of lithium ions, improve the electrical conductivity and desolvation performance, improve the rate performance of the battery, improve the cycling performance and high-temperature performance of the secondary battery, and reduce corrosion to the active material by the electrolyte solution.

The present application, by mixing the first positive electrode active material and the second positive electrode active material for use to complement the advantages of the two materials, improves the energy density of the secondary battery; and the internal lattice structure skeletons of the first positive electrode active material and the second positive electrode active material are stable. During the charging and discharging process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

Unless otherwise stated, in the chemical formula Li₁₊ₓMn_{1-y}A_{y}P_{1-z}R_{z}O₄, when A is a combination of at least two elements, the above definition of the numerical range of y not only represents a definition of the stoichiometric number of each element as A, but also represents a definition of the sum of the stoichiometric numbers of the elements as A. For example, when A is a combination of at least two elements of A1, A2... and An, the stoichiometric numbers y1, y2... and yn of each of A1, A2... and An each fall within the numerical range of y defined in the present application, and the sum of y1, y2... and yn also falls within this numerical range. Similarly, when R is a combination of at least two elements, the definitions of the numerical ranges of the stoichiometric numbers of R, M and X in the present application also have the above meanings.

Unless otherwise stated, in the chemical formula LiFe_{b}D_{c}PO₄, when D is a combination of at least two elements, the above definition of the numerical range of c not only represents a definition of the stoichiometric number of each element as D, but also represents a definition of the sum of the stoichiometric numbers of the elements as D. For example, when D is a combination of at least two elements of D1, D2... and Dn, the stoichiometric numbers c1, c2... and cn of each of D1, D2... and Dn each fall within the numerical range of c defined in the present application, and the sum of c1, c2... and cn also falls within this numerical range.

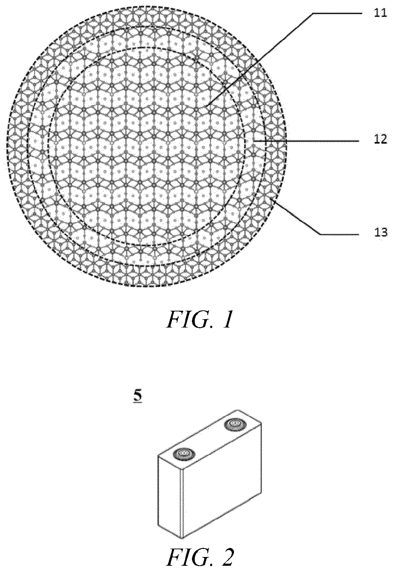

As shown in FIG. 1, the first positive electrode active material having a core-shell structure of the present application comprises an inner core 11, a first coating layer 12 coating the inner core 11, and a second coating layer 13 coating the first coating layer 12, wherein the inner core 11 comprises Li₁₊ₓMn_{1-y}A_{y}P_{1-z}R_{z}O₄. In the inner core 11, the element A doped at the manganese site of lithium manganese phosphate facilitates to reduce the lattice change rate of the lithium manganese phosphate during the process of lithium intercalation-deintercalation, improve the structural stability of the lithium manganese phosphate positive electrode material, greatly reduce the dissolution of manganese, and reduce the oxygen activity on the particle surface. The element R doped at the phosphorus site facilitates to change the difficulty of the change of the Mn-O bond length, thereby reducing the migration barrier of lithium ions, promoting the migration of lithium ions, and improving the rate performance of the secondary battery.

In some embodiments of the first to third aspects, Li₁₊ₓMn_{1-y}A_{y}P_{1-z}R_{z}O₄ entirely keeps electrical neutrality.

In some embodiments of the first to third aspects, LiFe_{b}D_{c}PO₄ entirely keeps electrical neutrality.

In some embodiments of the first to third aspects, in the second positive electrode active material, the mass of carbon accounts for 0.1% - 4% of the mass of carbon-coated LiFePO₄; and/or the mass of carbon accounts for 0.1% - 4% of the mass of the carbon-coated LiFe_{b}D_{c}PO₄. The use of the second positive electrode active material with the mass content of carbon described above can further ensure that the secondary battery has excellent rate performance, kinetic performance and low-temperature cycling performance, and has higher energy density.

In some embodiments of the first to third aspects, the mass ratio of the first positive electrode active material to the second positive electrode active material is 1 : 7 - 7 : 1, optionally 1 : 4 - 4 : 1, further optionally 1 : 3-3 : 1, such as 1 : 7, 1 : 5, 1 : 3, 1 : 2, 3 : 5, 1 : 1, 5 : 3, 2 : 1, 3 : 1, 5 : 1, and 7 : 1. The secondary battery is guaranteed to have higher energy density, excellent kinetic performance, excellent rate performance, long low-temperature cycle life, and higher low-temperature cycling capacity retention rate, and to reduce interface side reactions.

In some embodiments of the first to third aspects, in the first positive electrode active material, A comprises one or more elements selected from Zn, Fe, Ti, V, Ni, Co and Mg; and optionally, A comprises at least two elements selected from Fe, Ti, V, Ni, Co and Mg. By selecting the doping elements within the above ranges, it is beneficial to an enhanced doping effect. For one thing, the lattice change rate is further reduced, thereby inhibiting the dissolution of manganese and reducing the consumption of an electrolyte solution and active lithium. For another, it is also beneficial to further reduce the surface oxygen activity and the interface side reactions between the positive electrode active material and the electrolyte solution, thereby improving the cycling performance and high-temperature storage performance of the secondary battery.

In some embodiments of the first to third aspects, x is selected from a range of -0.100-0.006. By selecting the value of x within this range, the kinetic performance of the first positive electrode active material can be further improved.

In some embodiments of the first to third aspects, y is selected from a range of 0.1-0.4. By selecting the value of y within this ranges, the gram capacity of the first positive electrode active material and rate performance of the secondary battery can be further improved.

In some embodiments of the first to third aspects, M and X independently comprise one or more elements selected from Li and Fe.

In some embodiments of the first to third aspects, the ratio of y to 1-y is selected from 1 : 10 to 10 : 1, optionally 1 : 4 to 1 : 1. Here, y denotes the sum of the stoichiometric numbers of the Mn-site doping elements. When the above conditions are satisfied, the energy density and cycling performance of the secondary battery made of the positive electrode plate are further improved.

In some embodiments of the first to third aspects, the ratio of z to 1-z is selected from 1 : 999 to 1 : 9, optionally 1 : 499 to 1 : 249. Here, z denotes the sum of the stoichiometric numbers of the P-site doping elements. When the above conditions are satisfied, the energy density and cycling performance of the secondary battery made of the positive electrode plate can be further improved.

In some embodiments of the first to third aspects, in the first positive electrode active material, the first coating layer has an interplanar spacing of the phosphate of 0.345-0.358 nm, and an angle of the crystal direction (111) of 24.25° - 26.45°; and the first coating layer has an interplanar spacing of the pyrophosphate of 0.293-0.326 nm, and an angle of the crystal direction (111) of 26.41° - 32.57°.

When the interplanar spacing and angle of the crystal direction (111) of the phosphate and pyrophosphate in the first coating layer are within the above ranges, the impurity phase in the coating layer can be effectively avoided, thereby improving the gram capacity of the material and improving the cycling performance and rate performance of the secondary battery.

In some embodiments of the first to third aspects, in the first positive electrode active material, the coating amount of the first coating layer is greater than 0 wt% and less than or equal to 7 wt%, optionally 4-5.6 wt%, based on the weight of the inner core.

When the coating amount of the first coating layer is within the above ranges, the dissolution of manganese can be further inhibited, and at the same time, the transport of lithium ions can be further promoted. In addition, the following situations can be effectively avoided: if the coating amount of the first coating layer is too small, it may lead to insufficient inhibition of the dissolution of manganese by pyrophosphate, and non-significant improvement of lithium ion transport performance; and if the coating amount of the first coating layer is too large, it may cause the coating layer to be too thick, increase the impedance of the battery, and affect the kinetic performance of the secondary battery.

In some embodiments of the first to third aspects, in the first positive electrode active material, the weight ratio of pyrophosphate to phosphate in the first coating layer is 1 : 3 to 3 : 1, optionally 1 : 3 to 1 : 1.

The proper ratio of pyrophosphate to phosphate is conducive to giving full play to the synergistic effect of the two. And the following situations can be effectively avoided: if there is too much pyrophosphate and too little phosphate, it may lead to increased battery impedance; and if there is too much phosphate and too little pyrophosphate, the effect of inhibiting the dissolution of manganese will not be significant.

In some embodiments of the first to third aspects, in the first positive electrode active material, the pyrophosphate and the phosphate each independently have a crystallinity of 10% to 100%, optionally 50% to 100%. In the first coating layer of the lithium manganese phosphate positive electrode active material of the present application, the pyrophosphate and the phosphate, which have a certain crystallinity, are conducive to keeping the structure of the first coating layer stable and reducing the lattice defects. For one thing, it is conducive to giving full play to the effect of pyrophosphate on the prevention of the dissolution of manganese; for another, it is also beneficial for phosphate to reduce the content of lithium impurities on the surface and the surface oxygen valence state, thereby reducing the interface side reactions between the positive electrode material and the electrolyte solution, reducing the consumption of the electrolyte solution, and improving the cycling performance and safety performance of the secondary battery.

In some embodiments of the first to third aspects, in the first positive electrode active material, the coating amount of the second coating layer is greater than 0 wt% and less than or equal to 6 wt%, optionally 3-5 wt%, based on the weight of the inner core.

The carbon-containing layer as the second coating layer can play a "barrier" function to avoid direct contact between the first positive electrode active material and the electrolyte solution, thereby reducing the corrosion to the active material by the electrolyte solution and improving the safety performance of the secondary battery at a high temperature. Moreover, the carbon-containing layer has stronger electrical conductivity, which can reduce the internal resistance of the secondary battery, thereby improving the kinetic performance of the secondary battery. However, since the gram capacity of the carbon material is low, if the amount of the second coating layer is too large, the overall gram capacity of the positive electrode active material may be reduced. Thus, when the coating amount of the second coating layer is within the above ranges, the kinetic performance and safety performance of the secondary battery can be further improved, without compromising the gram capacity of the positive electrode active material.

In any embodiment of the first to third aspects, the Li/Mn antisite defect concentration of the first positive electrode active material is 4% or less, optionally 2% or less. In the first positive electrode active material of the present application, the Li/Mn antisite defect means that the positions of Li⁺ and Mn²⁺ have been exchanged in the LiMnPO₄ lattices. Since the Li⁺ transport channel is a one-dimensional channel, it is difficult for Mn²⁺ to migrate in the Li⁺ transport channel. Therefore, the Mn²⁺ antisite defect will prevent the transport of Li⁺. The gram capacity of LiMnPO₄ and the rate performance of the secondary battery can be improved by controlling the Li/Mn antisite defect concentration at a low level. In the present application, the antisite defect concentration may be measured, for example, according to JIS K 0131-1996.

In some embodiments of the first to third aspects, the lattice change rate of the first positive electrode active material is 6% or less, optionally 4% or less. The process of lithium intercalation-deintercalation of LiMnPO₄ is a two-phase reaction. The interfacial stress of the two phases is determined by the lattice change rate. The smaller the lattice change rate is, the smaller the interfacial stress is, and thus the easier Li⁺ transport is. Therefore, reducing the lattice change rate of the inner core will be beneficial to enhancing the Li⁺ transport ability, thereby improving the rate performance of the secondary battery.

In some embodiments of the first to third aspects, the surface oxygen valence state of the first positive electrode active material is -1.88 or less, optionally -1.98 to -1. 88. This is because the higher the valence state of oxygen in the compound is, the stronger the ability to obtain electrons is, that is, the stronger the oxidability is. However, in the first positive electrode active material of the present application, by controlling the oxygen surface valence state at a lower level, the reactivity of the surface of the positive electrode material can be reduced, and the interface side reactions between the positive electrode material and the electrolyte solution can be reduced, thereby improving the cycling performance and high-temperature storage performance of the secondary battery.

In some embodiments of the first to third aspects, the compacted density of the first positive electrode active material under 3 tons (T) is 2.0 g/cm³ or more, optionally 2.2 g/cm³ or more. The higher the compacted density of the first positive electrode active material is, that is, the greater the weight of the active material per unit volume is, the more conducive to improving the volumetric energy density of the secondary battery it is. In the present application, the compacted density can be measured, for example, according to GB/T 24533-2009.

In some embodiments of the first to third aspects, the sum of the mass of the first positive electrode active material and the second positive electrode active material accounts for 88% - 98.7% of the mass of the positive electrode plate. The secondary battery is further guaranteed to have excellent rate performance, kinetic performance and low-temperature cycling performance, and to have higher energy density.

In some embodiments of the first to third aspects, the positive electrode current collector has two surfaces opposite in its own thickness direction, and the positive electrode film layers are provided on either or both of the two opposite surfaces of the positive electrode current collector.

In some embodiments of the first to third aspects, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments of the first to third aspects, the positive electrode film layers may further comprise other positive electrode active materials known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of the lithium transition metal oxides may include, but are not limited to, at least one of a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide and a modified compound thereof, etc. Examples of the lithium-containing phosphates of the olivine structure may include, but are not limited to, at least one of a lithium manganese phosphate (such as LiMnPO₄), a composite of the lithium manganese phosphate and carbon, a lithium manganese iron phosphate, and a composite of the lithium manganese iron phosphate and carbon.

In some embodiments of the first to third aspects, the positive electrode film layers further optionally comprise a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments of the first to third aspects, the positive electrode film layers further optionally comprise a conductive agent. As an example, the conductive agent may comprise at least one of superconducting carbon, acetylene black, carbon black, Ketjen black, carbon dots, carbon nanotubes, graphene, and carbon nanofibers.

In some embodiments of the first to third aspects, a method for preparing a first positive electrode active material comprises the following steps:
step of providing an inner core material: the inner core material comprises Li₁₊ₓMn_{1-y}A_{y}P_{1-z}R_{z}O₄, wherein x is any value in a range of -0.100 to 0.100, y is any value in a range of 0.001 to 0.500, z is any value in a range of 0.001 to 0.100, A comprises one or more elements selected from Zn, Al, Na, K, Mg, Mo, W, Ti, V, Zr, Fe, Ni, Co, Ga, Sn, Sb, Nb and Ge, optionally one or more elements selected from Fe, Ti, V, Ni, Co and Mg, and R comprises one or more elements selected from B, Si, N and S; and
coating steps: providing a powder comprising pyrophosphate MP₂O₇ and a suspension comprising a carbon source and phosphate XPO₄, and mixing and sintering the inner core material, the powder comprising the pyrophosphate MP₂O₇ and the suspension comprising a carbon source and the phosphate XPO₄ to obtain a positive electrode active material, wherein M and X independently comprise one or more elements selected from Li, Fe, Ni, Mg, Co, Cu, Zn, Ti, Ag, Zr, Nb and Al, wherein
the positive electrode active material has a core-shell structure comprising an inner core and a shell coating the inner core, wherein the inner core comprises Li₁₊ₓMn_{1-y}A_{y}P_{1-z}R_{z}O₄, the shell comprises a first coating layer coating the inner core and a second coating layer coating the first coating layer, the first coating layer comprises pyrophosphate MₐP₂O₇ and phosphate XPO₄, and the second coating layer comprises a carbon element.

In some embodiments of the first to third aspects, the step of providing the inner core material comprises the steps:
Step (1): mixing a manganese source, a source of element A and an acid to obtain a mixture; and
Step (2): mixing the mixture with a lithium source, a phosphorus source, a source of element R and an optional solvent, and sintering same under the protection of an inert gas to obtain an inner core material comprising Li₁₊ₓMn_{1-y}A_{y}P_{1-z}R_{z}O₄. A and R are as defined hereinbefore.

In some embodiments, step (1) is carried out at 20°C - 120°C, optionally at 40°C - 120°C (such as about 30°C, about 50°C, about 60°C, about 70°C, about 80°C, about 90°C, about 100°C, about 110°C or about 120°C); and/or in step (1), mixing is carried out by stirring at a rotational speed of 400-700 rpm for 1-9 h (more optionally 3-7 h, such as about 2 hours, about 3 hours, about 4 hours, about 5 hours, about 6 hours, about 7 hours, about 8 hours or about 9 hours).

In some embodiments, in step (2), mixing is carried out at a temperature of 20 - 120°C, optionally 40 - 120°C (such as about 30°C, about 50°C, about 60°C, about 70°C, about 80°C, about 90°C, about 100°C, about 110°C or about 120°C) for 1-10 h (such as about 2 hours, about 3 hours, about 4 hours, about 5 hours, about 6 hours, about 7 hours, about 8 hours, about 9 hours, about 10 hours, about 11 hours or about 12 hours).

In some embodiments, in step (2), mixing is carried out at a pH of 3.5-6, optionally at a pH of 4-6, more preferably at a pH of 4-5. It should be noted that in the present application, the pH can be adjusted by methods commonly used in the art, for example, by adding acid or alkali.

In some embodiments, optionally, in step (2), the molar ratio of the mixture or the manganese salt particles doped with element A to the lithium source to the phosphorus source is 1 : 0.5 - 2.1 : 0.5 - 2.1, optionally about 1 : 1 : 1.

In some embodiments, in step (2), sintering is carried out at 600-950°C for 4-10 hours under an atmosphere of inert gas or a mixture of inert gas and hydrogen; optionally, the protective atmosphere is a mixed gas of 70-90% by volume of nitrogen and 10-30% by volume of hydrogen; optionally, sintering may be carried out at about 650°C, about 700°C, about 750°C, about 800°C, about 850°C or about 900°C for about 2 hours, about 3 hours, about 4 hours, about 5 hours, about 6 hours, about 7 hours, about 8 hours, about 9 hours or about 10 hours; and optionally, the sintering temperature and sintering time may be in any range of any of the above values, which can improve the crystallinity of the inner core, reduce the generation of impurity phases, and maintain a certain particle size of the inner core, thereby improving the gram capacity and compacted density of the positive electrode active material, and improving the overall performance of the secondary battery, including the rate performance.

In some optional embodiments, the mixture obtained in step (1) is filtered, dried, and ground to obtain element A-doped manganese salt particles with a particle size Dv50 of 50-200 nm. The element A-doped manganese salt particles are used in step (2) to mix with a lithium source, a phosphorus source, a source of element R and an optional solvent.

In some optional embodiments, the mixed material in step (2) is dried to obtain a powder, and then the powder is sintered to obtain an inner core material comprising Li₁₊ₓMn_{1-y}A_{y}P_{1-z}R_{z}O₄.

In some embodiments, the powder comprising pyrophosphate MP₂O₇ is prepared by the following steps:
mixing the source of element M, the phosphorus source and the optional solvent to obtain a mixture, adjusting the pH of the mixture to 4-6, continuing to mix, drying and sintering.

In some embodiments, in the step of preparing the powder comprising pyrophosphate MP₂O₇, drying is carried out at 100°C - 300°C, optionally at 150°C - 200°C for 4-8 hours; and/or sintering is carried out at 500°C - 800°C, optionally at 650°C - 800°C for 4-10 h under the protection of an inert gas.

In some embodiments, in the coating step, the sintering temperature is 500-800°C, and the sintering time is 4-10 h.

The preparation method of the present application does not have any limitations on the source of the material, the source of a certain element can comprise one or more of an elementary substance, a sulfate, a halide, a nitrate, an organic acid salt, an oxide and a hydroxide of this element, provided that the source can achieve the purpose of the preparation method of the present application.

In some embodiments, the source of element A is one or more selected from the elementary substance, sulfate, halide, nitrate, organic acid salt, oxide and hydroxide of element A; and/or the source of element R is one or more selected from the elementary substance, sulfate, halide, nitrate, organic acid salt, oxide and hydroxide of element R and the inorganic acid of element R.

In some embodiments, the source of element M is one or more selected from the elementary substance, carbonate, sulfate, halide, nitrate, organic acid salt, oxide and hydroxide of element M.

The added amounts of respective sources of the elements A, Rand M depend on a target doping amount, and a ratio of the amounts of the lithium source, the manganese source and the phosphorus source conforms to a stoichiometric ratio.

In the present application, the manganese source may be a manganese-containing substance known in the art that can be used to prepare a lithium manganese phosphate. As an example, the manganese source may be one or more selected from an elementary manganese, a manganese dioxide, a manganese phosphate, a manganese oxalate, and a manganese carbonate.

In the present application, the acid may be one or more selected from organic acids such as hydrochloric acid, sulfuric acid, nitric acid, phosphoric acid, silicic acid and siliceous acid and organic acids such as oxalic acid. In some embodiments, the acid is a dilute organic acid with a concentration of 60 wt% or less.

In the present application, the lithium source may be a lithium-containing substance known in the art that can be used to prepare lithium manganese phosphate. As an example, the lithium source is one or more selected from lithium carbonate, lithium hydroxide, lithium phosphate and lithium dihydrogen phosphate.

In the present application, the phosphorus source may be a phosphorus-containing substance known in the art that can be used to prepare lithium manganese phosphate. As an example, the phosphorus source is one or more selected from diammonium hydrogen phosphate, ammonium dihydrogen phosphate, ammonium phosphate and phosphoric acid.

In the present application, as an example, the carbon source is one or more selected from starch, sucrose, glucose, polyvinyl alcohol, polyethylene glycol and citric acid.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g., sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is liquid and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. As an example, the additive may comprise a negative electrode film-forming additive and a positive electrode film-forming additive, and may further comprise an additive that can improve some performance of the battery, such as an additive that improves overcharge performance of the battery, or an additive that improves high-temperature performance or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application, and may be cylindrical, square or of any other shape. For example, FIG. 2 shows a secondary battery 5 with a square structure as an example.

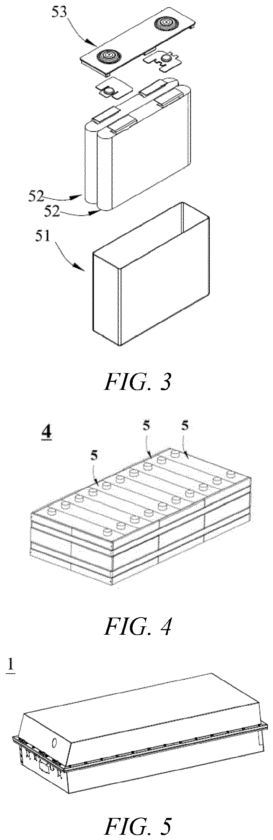

In some embodiments, referring to FIG. 3, the outer package may comprise a housing 51 and a cover plate 53. Herein, the housing 51 may comprise a bottom plate and side plates connected to the bottom plate, and the bottom plate and the side plates enclose to form an accommodation cavity. The housing 51 has an opening in communication with the accommodation cavity, and the cover plate 53 can cover the opening to close the accommodation cavity. The positive electrode plate, the negative electrode plate and the separator can be subjected to a winding process or a stacking process to form an electrode assembly 52. The electrode assembly 52 is packaged in the accommodation cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

FIG. 4 shows a battery module 4 as an example. Referring to FIG. 4, in the battery module 4, a plurality of secondary batteries 5 may be arranged in sequence in the lengthwise direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

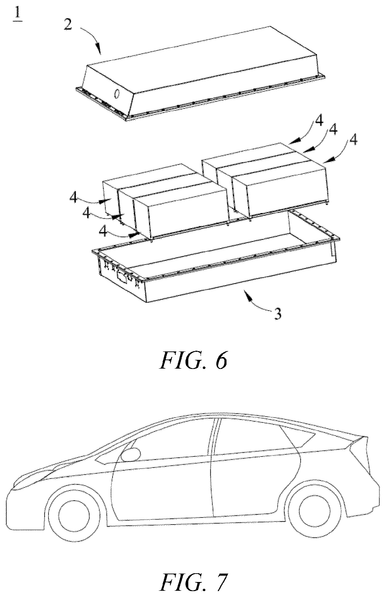

FIG. 5 and FIG. 6 show a battery pack 1 as an example. Referring to FIG. 5 and FIG. 6, the battery pack 1 may comprise a battery case and a plurality of battery modules 4 provided in the battery case. The battery box comprises an upper box body 2 and a lower box body 3, wherein the upper box body 2 can cover the lower box body 3 to form a closed space for accommodating the battery modules 4. A plurality of battery modules 4 may be arranged in the battery case in any manner.

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may comprise a mobile device (e.g., a mobile phone, a laptop computer, etc.), an electric vehicle (e.g., a battery electric vehicle, a hybrid electric vehicle, a plug-in hybrid electric vehicle, an electric bicycle, an electric scooter, an electric golf cart, and an electric truck), an electric train, ship, and satellite, an energy storage system, and the like, but is not limited thereto.

As a power consuming device, the secondary battery, battery module or battery pack can be selected according to the usage requirements thereof.

FIG. 7 shows a power consuming device as an example. The power consuming device may be a battery electric vehicle, a hybrid electric vehicle, a plug-in hybrid electric vehicle or the like. In order to meet the requirements of the power consuming device for a high power and a high energy density of a secondary battery, a battery pack or a battery module may be used.

### [Examples]

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available. The content of each component in the examples of the present application is based on the mass without crystal water, unless otherwise stated.

The sources of the raw materials involved in the preparation examples and examples of the present application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄^{•}2H₂O | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Hisian Biotechnology Co., Ltd. | Mass fraction 60% |
| Nitric acid | HNO₃ | Anhui Lingtian Fine Chemical Co., Ltd. | Mass fraction 60% |
| Siliceous acid | H₂SiO₃ | Shanghai Yuanye Biotechnology Co., Ltd. | 100 g |
| Boric acid | H₃BO₃ | Changzhou Qidi Chemical Co., Ltd. | 1 Kg |

### Example 1-1

### (1) Preparation of co-doped lithium manganese phosphate inner core

**Preparation of Fe, Co and V co-doped manganese oxalate:** 689.5 g of manganese carbonate (in MnCOs, the same below), 455.2 g of ferrous carbonate (in FeCOs, the same below), 4.6 g of cobalt sulfate (in CoSO₄, the same below) and 4.9 g of vanadium dichloride (in VCl₂, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotational speed of 600 rpm until the reaction is completed (no bubbles are generated), so as to obtain an Fe, Co, V and S co-doped manganese oxalate suspension. Then, the suspension is filtered, and the resulting filter cake is dried at 120°C and then ground, so as to obtain Fe, Co, and V co-doped manganese oxalate dihydrate particles with a median particle size Dv50 of 100 nm.

**Preparation of Fe, Co, V and S co-doped lithium manganese phosphate:** Manganese oxalate dihydrate particles (1793.4 g) obtained in the previous step, 369.0 g of lithium carbonate (in Li₂CO₃, the same below), 1.6 g of 60% dilute sulfuric acid (in 60% H₂SO₄, the same below) and 1148.9 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain 1572.1 g of Fe, Co, V and S co-doped lithium manganese phosphate.

### (2) Preparation of lithium iron pyrophosphate and lithium iron phosphate

**Preparation of lithium iron pyrophosphate powder:** 4.77 g of lithium carbonate, 7.47 g of ferrous carbonate, 14.84 g of ammonium dihydrogen phosphate and 1.3 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension comprising Li₂FeP₂O₇, which is filtered, washed with deionized water, and dried at 120°C for 4 hours to obtain a powder. The powder is sintered at 650°C under a nitrogen atmosphere for 8 h, cooled naturally to room temperature and then ground to obtain a Li₂FeP₂O₇ powder.

**Preparation of lithium iron phosphate suspension:** 11.1 g of lithium carbonate, 34.8 g of ferrous carbonate, 34.5 g of ammonium dihydrogen phosphate, 1.3 g of oxalic acid dihydrate and 74.6 g of sucrose (in C₁₂H₂₂O₁₁, the same below) are dissolved in 150 ml of deionized water to obtain a mixture, and then stirring is performed for 6 hours such that the mixture is fully reacted. Then, the reacted solution is heated to 120°C and kept at this temperature for 6 hours to obtain a suspension comprising LiFePO₄.

### (3) Coating

1572.1 g of the above Fe, Co, V and S co-doped lithium manganese phosphate and 15.72 g of the above lithium iron pyrophosphate (Li₂FeP₂O₇) powder are added into the suspension of lithium iron phosphate (LiFePO₄) prepared in the previous step, stirred and mixed uniformly, then transferred to a vacuum oven and dried at 150°C for 6 h. The resulting product is then dispersed by sanding. After dispersion, the obtained product is sintered at 700°C under a nitrogen atmosphere for 6 hours to obtain the target product of double-coated lithium manganese phosphate.

### Examples 1-2 to 1-6

In the preparation process of the co-doped lithium manganese phosphate inner core, except that vanadium dichloride and cobalt sulfate are not used, and 463.4 g of ferrous carbonate, 1.6 g of 60% dilute sulfuric acid, 1148.9 g of ammonium dihydrogen phosphate and 369.0 g of lithium carbonate are used, the preparation conditions of the lithium manganese phosphate inner core in examples 1-2 to 1-6 are the same as in example 1-1.

In addition, in the preparation process of lithium iron pyrophosphate and lithium iron phosphate and in the process of coating the first coating layer and the second coating layer, except that the raw materials used are adjusted correspondingly according to the ratio of the coating amount shown in Table 1 to the coating amount corresponding to example 1-1, such that the amount of Li₂FeP₂O₇/LiFePO₄ in examples 1-2 to 1-6 is 12.6 g/37.7 g, 15.7 g/47.1 g, 18.8 g/56.5 g, 22.0/66.0 g and 25.1 g/75.4 g, respectively, and the amount of sucrose in the examples 1-2 to 1-6 is 37.3 g, other conditions are the same as in example 1-1.

### Examples 1-7 to 1-10

Except that the amounts of sucrose are 74.6 g, 149.1 g, 186.4 g and 223.7 g, respectively, such that the corresponding coating amounts of the carbon layer as the second coating layer are 31.4 g, 62.9 g, 78.6 g and 94.3 g, respectively, the conditions in examples 1-7 to 1-10 are the same as in example 1-3.

### Examples 1-11 to 1-14

In the preparation process of lithium iron pyrophosphate and lithium iron phosphate, except that the amounts of various raw materials are adjusted correspondingly according to the coating amount shown in Table 1, such that the amount of Li₂FeP₂O₇/LiFePO₄ is 23.6 g/39.3 g, 31.4 g/31.4 g, 39.3 g/23.6 g and 47.2 g/15.7 g, respectively, the conditions in examples 1-11 to 1-14 are the same as in example 1-7.

### Example 1-15

In the preparation process of co-doped lithium manganese phosphate inner core, except that iron ferrous carbonate is replaced by 492.80 g of ZnCO₃, the conditions in example 1-15 are the same as in example 1-14.

### Examples 1-16 to 1-18

Except that in the preparation process of co-doped lithium manganese phosphate inner core of example 1-16, ferrous carbonate is replaced by 466.4 g of NiCO₃, 5.0 g of zinc carbonate and 7.2 g of titanium sulfate; except that in the preparation process of co-doped lithium manganese phosphate inner core of example 1-17, 455.2 g of ferrous carbonate and 8.5 g of vanadium dichloride are used; and except that in the preparation process of co-doped lithium manganese phosphate inner core of example 1-18, 455.2 g of ferrous carbonate, 4.9 g of vanadium dichloride and 2.5 g of magnesium carbonate are used, the conditions in examples 1-17 to 1-19 are the same as in example 1-7.

### Examples 1-19 to 1-20

Except that in the preparation process of co-doped lithium manganese phosphate inner core of example 1-19, 369.4 g of lithium carbonate is used, and dilute sulphuric acid is replaced by 1.05 g of 60% dilute nitric acid; and except that in the preparation process of co-doped lithium manganese phosphate inner core of example 1-20, 369.7 g of lithium carbonate is used, and dilute sulphuric acid is replaced by 0.78 g of siliceous acid, the conditions in examples 1-19 to 1-20 are the same as in example 1-18.

### Examples 1-21 to 1-22

Except that in the preparation process of co-doped lithium manganese phosphate inner core of example 1-21, 632.0 g of manganese carbonate, 463.30 g of ferrous carbonate, 30.5 g of vanadium dichloride, 21.0 g of magnesium carbonate and 0.78 g of siliceous acid are used; and except that in the preparation process of co-doped lithium manganese phosphate inner core of example 1-22, 746.9 g of manganese carbonate, 289.6 g of ferrous carbonate, 60.9 g of vanadium dichloride, 42.1 g of magnesium carbonate and 0.78 g of siliceous acid are used, the conditions in examples 1-21 to 1-22 are the same as in example 1-20.

### Examples 1-23 to 1-24

Except that in the preparation process of co-doped lithium manganese phosphate inner core of example 1-23, 804.6 g of manganese carbonate, 231.7 g of ferrous carbonate, 1156.2 g of ammonium dihydrogen phosphate, 1.2 g of boric acid (with a mass fraction of 99.5%) and 370.8 g of lithium carbonate are used; and except that in the preparation process of co-doped lithium manganese phosphate inner core of example 1-24, 862.1 g of manganese carbonate, 173.8 g of ferrous carbonate, 1155.1 g of ammonium dihydrogen phosphate, 1.86 g of boric acid (with a mass fraction of 99.5%) and 371.6 g of lithium carbonate are used, the conditions in examples 1-23 to 1-24 are the same as in example 1-22.

### Example 1-25

Except that in the preparation process of co-doped lithium manganese phosphate inner core of example 1-25, 370.1 g of lithium carbonate, 1.56 g of siliceous acid and 1147.7 g of ammonium dihydrogen phosphate are used, the conditions in example 1-25 are the same as in Example 1-20.

### Example 1-26

Except that in the preparation process of co-doped lithium manganese phosphate inner core of example 1-26, 368.3 g of lithium carbonate, 4.9 g of dilute sulfuric acid (with a mass fraction of 60%), 919.6 g of manganese carbonate, 224.8 g of ferrous carbonate, 3.7 g of vanadium dichloride, 2.5 g of magnesium carbonate and 1146.8 g of ammonium dihydrogen phosphate are used, the conditions in example 1-26 are the same as in Example 1-20.

### Example 1-27

Except that in the preparation process of co-doped lithium manganese phosphate inner core of example 1-27, 367.9 g of lithium carbonate, 6.5 g of 60% dilute sulfuric acid and 1145.4 g of ammonium dihydrogen phosphate are used, the conditions in example 1-27 are the same as in example 1-20.

### Examples 1-28 to 1-33

Except that in the preparation process of co-doped lithium manganese phosphate inner core of examples 1-28 to 1-33, 1034.5 g of manganese carbonate, 108.9 g of ferrous carbonate, 3.7 g of vanadium dichloride and 2.5 g of magnesium carbonate are used; the amounts of lithium carbonate are respectively: 367.6 g, 367.2 g, 366.8 g, 366.4 g, 366.0 g and 332.4 g; the amounts of ammonium dihydrogen phosphate are respectively: 1144.5 g, 1143.4 g, 1142.2 g, 1141.1 g, 1139.9 g and 1138.8 g; and the amounts of 60% dilute sulfuric acid are respectively: 8.2 g, 9.8 g, 11.4 g, 13.1 g, 14.7 g and 16.3 g, the conditions in examples 1-28 to 1-33 are the same as in example 1-20.

### Example 1-34 to Example 1-53

The positive electrode active materials of example 1-34 to example 1-53 are shown in Table 1.

**Table 1 Positive electrode active materials of example 1-34 to example 1-53**

| | Positive electrode active material | Mass content of carbon | Manufactur er |
|---|---|---|---|
| Exampl e 1-34 | Carbon-coated LiFePO₄ | 1% | Dynanonic Co., Ltd. |
| Exampl e 1-35 | Mixing the positive electrode active material of example 1-1 with that of example 1-34 in a mass ratio of 1 : 1 | - | - |
| Exampl e 1-36 | Carbon-coated LiFe_{0.99} Mg_{0.01}PO₄ | 1% | Dynanonic Co., Ltd. |
| Exampl e 1-37 | Mixing the positive electrode active material of example 1-1 with that of example 1-36 in a mass ratio of 1 : 1 | - | - |
| Exampl e 1-38 | Carbon-coated LiFePO₄ | 0.10% | Dynanonic Co., Ltd. |
| Exampl e 1-39 | Carbon-coated LiFePO₄ | 4% | Dynanonic Co., Ltd. |
| Exampl e 1-40 | Carbon-coated LiFe_{0.99}Mg_{0.01}PO₄ | 0.1% | Dynanonic Co., Ltd. |
| Exampl e 1-41 | Carbon-coated LiFe_{0.99}Mg0.01PO₄ | 4% | Dynanonic Co., Ltd. |
| Exampl e 1-42 | Carbon-coated LiFe_{0.999}Mg_{0.001}PO₄ | 1% | Dynanonic Co., Ltd. |
| Exampl e 1-43 | Carbon-coated LiFe_{0.99}Mg_{0.01}PO₄ | 1% | Dynanonic Co., Ltd. |
| Exampl e 1-44 | Carbon-coated LiFe_{0.995}V_{0.005}PO₄ | 1% | Dynanonic Co., Ltd. |
| Exampl e 1-45 | Carbon-coated LiFe_{0.995}Al_{0.}005PO₄ | 1% | Dynanonic Co., Ltd. |
| Exampl e 1-46 to Exampl e 1-53 | Mixing the positive electrode active material of example 1-1 with that of example 1-38 to example 1-45 in a mass ratio of 1 : 1, respectively | - | - |

### Example 2-1

Except that in the preparation process of lithium iron pyrophosphate (Li₂FeP₂O₇), in the powder sintering step, the sintering temperature is 550°C and the sintering time is 1 h to control the crystallinity of Li₂FeP₂O₇ to be 30%; and except that in the preparation process of lithium iron phosphate (LiFePO₄), in the coating sintering step, the sintering temperature is 650°C and the sintering time is 2 h to control the crystallinity of LiFePO₄ to be 30%, other conditions are the same as in example 1-1.

### Example 2-2

Except that in the preparation process of lithium iron pyrophosphate (Li₂FeP₂O₇), in the powder sintering step, the sintering temperature is 550°C and the sintering time is 2 h to control the crystallinity of Li₂FeP₂O₇ to be 50%; and except that in the preparation process of lithium iron phosphate (LiFePO₄), in the coating sintering step, the sintering temperature is 650°C and the sintering time is 3 h to control the crystallinity of LiFePO₄ to be 50%, other conditions are the same as in example 1-1.

### Example 2-3

Except that in the preparation process of lithium iron pyrophosphate (Li₂FeP₂O₇), in the powder sintering step, the sintering temperature is 600°C and the sintering time is 3 h to control the crystallinity of Li₂FeP₂O₇ to be 70%; and except that in the preparation process of lithium iron phosphate (LiFePO₄), in the coating sintering step, the sintering temperature is 650°C and the sintering time is 4 h to control the crystallinity of LiFePO₄ to be 70%, other conditions are the same as in example 1-1.

### Example 2-4

Except that in the preparation process of lithium iron pyrophosphate (Li₂FeP₂O₇), in the powder sintering step, the sintering temperature is 650°C and the sintering time is 4 h to control the crystallinity of Li₂FeP₂O₇ to be 100%; and except that in the preparation process of lithium iron phosphate (LiFePO₄), in the coating sintering step, the sintering temperature is 700°C and the sintering time is 6 h to control the crystallinity of LiFePO₄ to be 100%, other conditions are the same as in example 1-1.

### Examples 3-1 to 3-12

Except that in the preparation process of Fe, Co, and V co-doped manganese oxalate particles, the heating temperature/stirring time in the reaction kettle of example 3-1 is 60°C/120 min, respectively; the heating temperature/stirring time in the reaction kettle of example 3-2 is 70°C/120 min, respectively; the heating temperature/stirring time in the reaction kettle of example 3-3 is 80°C/120 min, respectively; the heating temperature/stirring time in the reaction kettle of example 3-4 is 90°C/120 min, respectively; the heating temperature/stirring time in the reaction kettle of example 3-5 is 100°C/120 min, respectively; the heating temperature/stirring time in the reaction kettle of example 3-6 is 110°C/120 min, respectively; the heating temperature/stirring time in the reaction kettle of example 3-7 is 120°C/120 min, respectively; the heating temperature/stirring time in the reaction kettle of example 3-8 is 130°C/120 min, respectively; the heating temperature/stirring time in the reaction kettle of example 3-9 is 100°C/60 min, respectively; the heating temperature/stirring time in the reaction kettle of example 3-10 is 100°C/90 min, respectively; the heating temperature/stirring time in the reaction kettle of example 3-11 is 100°C/150 min, respectively; and except that the heating temperature/stirring time in the reaction kettle of example 3-12 is 100°C/180 min, respectively, other conditions in examples 3-1 to 3-12 are the same as in example 1-1.

### Examples 4-1 to 4-4:

Except that in the preparation process of lithium iron pyrophosphate (Li₂FeP₂O₇), in the drying step, the drying temperature/drying time is 100°C/4 h, 150°C/6 h, 200°C/6 h and 200°C/6 h, respectively; and except that in the preparation process of lithium iron pyrophosphate (Li₂FeP₂O₇), in the sintering step, the sintering temperature and sintering time are 700°C/6 h, 700°C/6 h, 700°C/6 h and 600°C/6 h, respectively, other conditions are the same as in example 1-7.

### Examples 4-5 to 4-7:

Except that in the coating process, the drying temperature/drying time in the drying step is 150°C/6 h, 150°C/6 h and 150°C/6 h, respectively; and except that in the coating process, in the sintering step, the sintering temperature and sintering time are 600°C/4 h, 600°C/6 h and 800°C/8 h, respectively, other conditions are the same as in example 1-12.

### Comparative example 1

**Preparation of manganese oxalate:** 1149.3 g of manganese carbonate is added into a reaction kettle, and 5 L of deionized water and 1260.6 g of oxalic acid dihydrate (in C₂H₂O₄•2H₂O, the same below) are added. The reaction kettle is heated to 80°C, stirring is performed for 6 hours at a rotational speed of 600 rpm until the reaction is completed (no bubbles are generated), so as to obtain a manganese oxalate suspension. Then, the suspension is filtered, and the resulting filter cake is dried at 120°C and then ground to obtain manganese oxalate dihydrate particles with a median particle size Dv50 of 100 nm.

**Preparation of carbon-coated lithium manganese phosphate:** 1789.6 g of manganese oxalate dihydrate particles obtained above, 369.4 g of lithium carbonate (in Li₂CO₃, the same below), 1150.1 g of ammonium dihydrogen phosphate (in NH₄H₂PO₄, the same below) and 31 g of sucrose (in C₁₂H₂₂O₁₁, the same below) are added to 20 L of deionized water, and the mixture is stirred for 10 hours to be uniformly mixed, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain carbon doped lithium manganese phosphate.

### Comparative example 2

Except that 689.5 g of manganese carbonate is used and 463.3 g of ferrous carbonate is additionally added, other conditions in comparative example 2 are the same as in comparative example 1.

### Comparative example 3

Except that 1148.9 g of ammonium dihydrogen phosphate and 369.0 g of lithium carbonate are used, and 1.6 g of 60% dilute sulfuric acid is additionally added, other conditions in comparative example 3 are the same as in comparative example 1.

### Comparative example 4

Except that 689.5 g of manganese carbonate, 1148.9 g of ammonium dihydrogen phosphate and 369.0 g of lithium carbonate are used, and 463.3 g of ferrous carbonate and 1.6 g of 60% dilute sulfuric acid are additionally added, other conditions in comparative example 4 are the same as in comparative example 1.

### Comparative example 5

Except for the following additional steps: when preparing lithium iron pyrophosphate powder, 9.52 g of lithium carbonate, 29.9 g of ferrous carbonate, 29.6 g of ammonium dihydrogen phosphate and 32.5 g of oxalic acid dihydrate are dissolved in 50 ml of deionized water; the pH of the mixture is 5, and stirring is performed for 2 hours such that the reaction mixture is fully reacted; then, the reacted solution is heated to 80°C and kept at this temperature for 4 hours to obtain a suspension comprising Li₂FeP₂O₇, which is filtered, washed with deionized water, and dried at 120°C for 4 hours to obtain a powder; and the powder is sintered at 500°C under a nitrogen atmosphere for 4 h, and then ground after cooling to room temperature naturally to control the crystallinity of Li₂FeP₂O₇ to be 5%; and when preparing a carbon-coated material, except that the amount of Li₂FeP₂O₇ is 62.8 g, other conditions in comparative example 5 are the same as in comparative example 4.

### Comparative example 6

Except for the following additional steps: when preparing a lithium iron phosphate suspension, 14.7 g of lithium carbonate, 46.1 g of ferrous carbonate, 45.8 g of ammonium dihydrogen phosphate and 50.2 g of oxalic acid dihydrate are dissolved in 500 ml of deionized water, and then stirred for 6 hours such that the mixture is fully reacted; then, the reacted solution is heated to 120°C and kept at this temperature for 6 hours to obtain a suspension comprising LiFePO₄; in the preparation process of lithium iron phosphate (LiFePO₄), the sintering temperature is 600°C and the sintering time is 4 h in the coating sintering step to control the crystallinity of LiFePO₄ to be 8%; and when preparing a carbon-coated material, except that the amount of LiFePO₄ is 62.8 g, other conditions in comparative example 6 are the same as in comparative example 4.

### Comparative example 7

**Preparation of lithium iron pyrophosphate powder:** 2.38 g of lithium carbonate, 7.5 g of ferrous carbonate, 7.4 g of ammonium dihydrogen phosphate and 8.1 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension comprising Li₂FeP₂O₇, which is filtered, washed with deionized water, and dried at 120°C for 4 hours to obtain a powder. The powder is sintered at 500°C under a nitrogen atmosphere for 4 h, cooled naturally to room temperature and then ground to control the crystallinity of Li₂FeP₂O₇ to be 5%.

**Preparation of lithium iron phosphate suspension:** Except that 11.1 g of lithium carbonate, 34.7 g of ferrous carbonate, 34.4 g of ammonium dihydrogen phosphate, 37.7 g of oxalic acid dihydrate and 37.3 g of sucrose (in C₁₂H₂₂O₁₁, the same below) are dissolved in 1500 ml of deionized water, and then stirred for 6 hours such that the mixture is fully reacted. Then, the reacted solution is heated to 120°C and kept at this temperature for 6 hours to obtain a suspension comprising LiFePO₄.

15.7 g of the lithium iron pyrophosphate powder obtained is added to the above lithium iron phosphate (LiFePO₄) and sucrose suspension; and in the preparation process, the sintering temperature is 600°C and the sintering time is 4 h in the coating sintering step to control the crystallinity of LiFePO₄ to be 8%, other conditions in comparative example 7 are the same as in comparative example 4, thereby obtaining amorphous lithium iron pyrophosphate, amorphous lithium iron phosphate, and the carbon-coated positive electrode active material.

### Comparative examples 8-11

Except that in the preparation process of lithium iron pyrophosphate (Li₂FeP₂O₇), in the drying step of comparative examples 8-10, the drying temperature/drying time is 80°C/3 h, 80°C/3 h and 80°C/3 h, respectively; except that in the preparation process of lithium iron pyrophosphate (Li₂FeP₂O₇), in the sintering step of comparative examples 8-10, the sintering temperature and sintering time are 400°C/3 h, 400°C/3 h and 350°C/2 h, respectively; except that in comparative example 11, in the preparation process of lithium iron phosphate (LiFePO₄), the drying temperature/drying time in the drying step is 80°C/3 h; and except that in comparative examples 8-11, the amount of Li₂FeP₂O₇/LiFePO₄ is 47.2 g/15.7 g, 15.7 g/47.2 g, 62.8 g/0 g, and 0 g/62.8 g, respectively, other conditions are the same as in example 1-7.

The positive electrode active material prepared above, a conductive agent superconducting carbon black (Super-P) and a binder polyvinylidene fluoride (PVDF) are added to N-methylpyrrolidone (NMP) in a weight ratio of 92 : 2.5 : 5.5, followed by stirring and uniformly mixing to obtain a slurry of the positive electrode active material with a solid content of 60% w/w.

### Preparation of positive electrode plate

### Example 5-1

The slurry of positive electrode active material of example 1-1 is evenly coated on both sides of the aluminum foil of the current collector in a coating amount of 0.019 g/cm², vacuum-dried at a high temperature of 100-120°C for 14 h, and compacted by a roller press to obtain the positive electrode plate P1.

### Example 5-2

The slurry of positive electrode active material of example 1-34 is evenly coated on both sides of the aluminum foil of the current collector in a coating amount of 0.019 g/cm², vacuum-dried at a high temperature of 100-120°C for 14 h, and compacted by a roller press to obtain the positive electrode plate P2.

### Example 5-3

The slurry of positive electrode active material of example 1-1 is evenly coated on one side of the aluminum foil in a coating amount of 0.019 g/cm², and the slurry of positive electrode active material of example 1-34 is evenly coated on the other side of the aluminum foil in a coating amount of 0.019 g/cm², vacuum-dried at a high temperature of 100-120°C for 14 h, and compacted by a roller press to obtain the positive electrode plate P3.

### Example 5-4

The slurry of positive electrode active material of example 1-35 is evenly coated on both sides of the aluminum foil of the current collector in a coating amount of 0.019 g/cm², and other conditions are the same as in example 5-3, thereby obtaining the positive electrode plate P4.

### Example 5-5

The slurry of positive electrode active material of example 1-1 is evenly coated on one side of the aluminum foil in a coating amount of 0.019 g/cm², and the slurry of positive electrode active material of example 1-35 is coated on the other side of the aluminum foil in a coating amount of 0.019 g/cm², and other conditions are the same as in example 5-3, thereby obtaining the positive electrode plate P5.

### Example 5-6

The slurry of positive electrode active material of example 1-34 is evenly coated on one side of the aluminum foil in a coating amount of 0.019 g/cm², and the slurry of positive electrode active material of example 1-35 is coated on the other side of the aluminum foil in a coating amount of 0.019 g/cm², and other conditions are the same as in example 5-3, thereby obtaining the positive electrode plate P6.

### Example 5-7

The slurry of positive electrode active material of example 1-1 and the slurry of positive electrode active material of example 1-34 are coated successively on both sides of aluminum foil in a coating amount of 0.010 g/cm² for each layer of slurry, then vacuum-dried at a high temperature of 100-120°C for 14 h, and compacted by a roller press to obtain the positive electrode plate P7.

### Example 5-8

The slurry of positive electrode active material of example 1-34 and the slurry of positive electrode active material of example 1-1 are coated successively on both sides of aluminum foil in a coating amount of 0.010 g/cm² for each layer of slurry, and other conditions are the same as in example 5-7, thereby obtaining the positive electrode plate P8.

### Example 5-9

The slurry of positive electrode active material of example 1-1 and the slurry of positive electrode active material of example 1-35 are coated successively on both sides of aluminum foil in a coating amount of 0.010 g/cm² for each layer of slurry, and other conditions are the same as in example 5-7, thereby obtaining the positive electrode plate P9.

### Example 5-10

The slurry of positive electrode active material of example 1-35 and the slurry of positive electrode active material of example 1-1 are coated successively on both sides of aluminum foil in a coating amount of 0.010 g/cm² for each layer of slurry, and other conditions are the same as in example 5-7, thereby obtaining the positive electrode plate P10.

### Example 5-11

The slurry of positive electrode active material of example 1-34 and the slurry of positive electrode active material of example 1-35 are coated successively on both sides of aluminum foil in a coating amount of 0.010 g/cm² for each layer of slurry, and other conditions are the same as in example 5-7, thereby obtaining the positive electrode plate P11.

### Example 5-12

The slurry of positive electrode active material of example 1-35 and the slurry of positive electrode active material of example 1-34 are coated successively on both sides of aluminum foil in a coating amount of 0.010 g/cm² for each layer of slurry, and other conditions are the same as in example 5-7, thereby obtaining the positive electrode plate P12.

### Example 5-13

The slurry of positive electrode active material of example 1-1 and the slurry of positive electrode active material of example 1-34 are coated successively on the A side of the aluminum foil in a coating amount of 0.010 g/cm² for each layer of slurry, and the slurry of positive electrode active material of example 1-1 is evenly coated on the B side of the aluminum foil in a coating amount of 0.020 g/cm², then vacuum-dried at a high temperature of 100-120°C for 14 h, and compacted by a roller press to obtain the positive electrode plate P13.

### Example 5-14

The slurry of positive electrode active material of example 1-1 and the slurry of positive electrode active material of example 1-34 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P14.

### Example 5-15

The slurry of positive electrode active material of example 1-1 and the slurry of positive electrode active material of example 1-34 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P15.

### Example 5-16

The slurry of positive electrode active material of example 1-34 and the slurry of positive electrode active material of example 1-1 are coated successively on the A side of the aluminum foil in a coating amount of 0.010 g/cm² for each layer of slurry, the slurry of positive electrode active material of example 1-1 is evenly coated on the B side of the aluminum foil in a coating amount of 0.020 g/cm², and other conditions are the same as in example 5-13, thereby obtaining the positive electrode plate P16.

### Example 5-17

The slurry of positive electrode active material of example 1-34 and the slurry of positive electrode active material of example 1-1 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P17.

### Example 5-18

The slurry of positive electrode active material of example 1-34 and the slurry of positive electrode active material of example 1-1 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P18.

### Example 5-19

The slurry of positive electrode active material of example 1-1 and the slurry of positive electrode active material of example 1-35 are coated successively on the A side of the aluminum foil in a coating amount of 0.010 g/cm² for each layer of slurry, the slurry of positive electrode active material of example 1-1 is evenly coated on the B side of the aluminum foil in a coating amount of 0.020 g/cm², and other conditions are the same as in example 5-13, thereby obtaining the positive electrode plate P19.

### Example 5-20

The slurry of positive electrode active material of example 1-1 and the slurry of positive electrode active material of example 1-35 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P20.

### Example 5-21

The slurry of positive electrode active material of example 1-1 and the slurry of positive electrode active material of example 1-35 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P21.

### Example 5-22

The slurry of positive electrode active material of example 1-35 and the slurry of positive electrode active material of example 1-1 are coated successively on the A side of the aluminum foil in a coating amount of 0.010 g/cm² for each layer of slurry, the slurry of positive electrode active material of example 1-1 is evenly coated on the B side of the aluminum foil in a coating amount of 0.020 g/cm², and other conditions are the same as in example 5-13, thereby obtaining the positive electrode plate P22.

### Example 5-23

The slurry of positive electrode active material of example 1-35 and the slurry of positive electrode active material of example 1-1 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P23.

### Example 5-24

The slurry of positive electrode active material of example 1-35 and the slurry of positive electrode active material of example 1-1 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P24.

### Example 5-25

The slurry of positive electrode active material of example 1-34 and the slurry of positive electrode active material of example 1-35 are coated successively on the A side of the aluminum foil in a coating amount of 0.010 g/cm² for each layer of slurry, the slurry of positive electrode active material of example 1-1 is evenly coated on the B side of the aluminum foil in a coating amount of 0.020 g/cm², and other conditions are the same as in example 5-13, thereby obtaining the positive electrode plate P25.

### Example 5-26

The slurry of positive electrode active material of example 1-34 and the slurry of positive electrode active material of example 1-35 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P26.

### Example 5-27

The slurry of positive electrode active material of example 1-34 and the slurry of positive electrode active material of example 1-35 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P27.

### Example 5-28

The slurry of positive electrode active material of example 1-35 and the slurry of positive electrode active material of example 1-34 are coated successively on the A side of the aluminum foil in a coating amount of 0.010 g/cm² for each layer of slurry, the slurry of positive electrode active material of example 1-1 is evenly coated on the B side of the aluminum foil in a coating amount of 0.020 g/cm², and other conditions are the same as in example 5-13, thereby obtaining the positive electrode plate P28.

### Example 5-29

The slurry of positive electrode active material of example 1-35 and the slurry of positive electrode active material of example 1-34 are coated successively on the A side of the aluminum foil in a coating amount of 0.010 g/cm² for each layer of slurry, the slurry of positive electrode active material of example 1-34 is evenly coated on the B side of the aluminum foil in a coating amount of 0.020 g/cm², and other conditions are the same as in example 5-13, thereby obtaining the positive electrode plate P29.

### Example 5-30

The slurry of positive electrode active material of example 1-35 and the slurry of positive electrode active material of example 1-34 are coated successively on the A side of the aluminum foil in a coating amount of 0.010 g/cm² for each layer of slurry, the slurry of positive electrode active material of example 1-35 is evenly coated on the B side of the aluminum foil in a coating amount of 0.020 g/cm², and other conditions are the same as in example 5-13, thereby obtaining the positive electrode plate P30.

### Example 5-31

The slurry of positive electrode active material of example 1-36 is evenly coated on both sides of the aluminum foil of the current collector in a coating amount of 0.019 g/cm², vacuum-dried at a high temperature of 100-120°C for 14 h, and compacted by a roller press to obtain the positive electrode plate P31.

### Example 5-32

The slurry of positive electrode active material of example 1-37 is evenly coated on both sides of the aluminum foil of the current collector in a coating amount of 0.019 g/cm², vacuum-dried at a high temperature of 100-120°C for 14 h, and compacted by a roller press to obtain the positive electrode plate P32.

### Example 5-33

The slurry of positive electrode active material of example 1-38 is evenly coated on both sides of the aluminum foil of the current collector in a coating amount of 0.019 g/cm², vacuum-dried at a high temperature of 100-120°C for 14 h, and compacted by a roller press to obtain the positive electrode plate P33.

### Example 5-34

The slurry of positive electrode active material of example 1-39 is evenly coated on both sides of the aluminum foil of the current collector in a coating amount of 0.019 g/cm², vacuum-dried at a high temperature of 100-120°C for 14 h, and compacted by a roller press to obtain the positive electrode plate P34.

### Example 5-35

The slurry of positive electrode active material of example 1-40 is evenly coated on both sides of the aluminum foil of the current collector in a coating amount of 0.019 g/cm², vacuum-dried at a high temperature of 100-120°C for 14 h, and compacted by a roller press to obtain the positive electrode plate P35.

### Example 5-36

The slurry of positive electrode active material of example 1-41 is evenly coated on both sides of the aluminum foil of the current collector in a coating amount of 0.019 g/cm², vacuum-dried at a high temperature of 100-120°C for 14 h, and compacted by a roller press to obtain the positive electrode plate P36.

### Example 5-37

The slurry of positive electrode active material of example 1-42 is evenly coated on both sides of the aluminum foil of the current collector in a coating amount of 0.019 g/cm², vacuum-dried at a high temperature of 100-120°C for 14 h, and compacted by a roller press to obtain the positive electrode plate P37.

### Example 5-38

The slurry of positive electrode active material of example 1-43 is evenly coated on both sides of the aluminum foil of the current collector in a coating amount of 0.019 g/cm², vacuum-dried at a high temperature of 100-120°C for 14 h, and compacted by a roller press to obtain the positive electrode plate P38.

### Example 5-39

The slurry of positive electrode active material of example 1-44 is evenly coated on both sides of the aluminum foil of the current collector in a coating amount of 0.019 g/cm², vacuum-dried at a high temperature of 100-120°C for 14 h, and compacted by a roller press to obtain the positive electrode plate P39.

### Example 5-40

The slurry of positive electrode active material of example 1-45 is evenly coated on both sides of the aluminum foil of the current collector in a coating amount of 0.019 g/cm², vacuum-dried at a high temperature of 100-120°C for 14 h, and compacted by a roller press to obtain the positive electrode plate P40.

### Example 5-41

The slurry of positive electrode active material of example 1-46 is evenly coated on both sides of the aluminum foil of the current collector in a coating amount of 0.019 g/cm², vacuum-dried at a high temperature of 100-120°C for 14 h, and compacted by a roller press to obtain the positive electrode plate P41.

### Example 5-42

The slurry of positive electrode active material of example 1-47 is evenly coated on both sides of the aluminum foil of the current collector in a coating amount of 0.019 g/cm², vacuum-dried at a high temperature of 100-120°C for 14 h, and compacted by a roller press to obtain the positive electrode plate P42.

### Example 5-43

The slurry of positive electrode active material of example 1-48 is evenly coated on both sides of the aluminum foil of the current collector in a coating amount of 0.019 g/cm², vacuum-dried at a high temperature of 100-120°C for 14 h, and compacted by a roller press to obtain the positive electrode plate P43.

### Example 5-44

The slurry of positive electrode active material of example 1-49 is evenly coated on both sides of the aluminum foil of the current collector in a coating amount of 0.019 g/cm², vacuum-dried at a high temperature of 100-120°C for 14 h, and compacted by a roller press to obtain the positive electrode plate P44.

### Example 5-45

The slurry of positive electrode active material of example 1-50 is evenly coated on both sides of the aluminum foil of the current collector in a coating amount of 0.019 g/cm², vacuum-dried at a high temperature of 100-120°C for 14 h, and compacted by a roller press to obtain the positive electrode plate P45.

### Example 5-46

The slurry of positive electrode active material of example 1-51 is evenly coated on both sides of the aluminum foil of the current collector in a coating amount of 0.019 g/cm², vacuum-dried at a high temperature of 100-120°C for 14 h, and compacted by a roller press to obtain the positive electrode plate P46.

### Example 5-47

The slurry of positive electrode active material of example 1-52 is evenly coated on both sides of the aluminum foil of the current collector in a coating amount of 0.019 g/cm², vacuum-dried at a high temperature of 100-120°C for 14 h, and compacted by a roller press to obtain the positive electrode plate P47.

### Example 5-48

The slurry of positive electrode active material of example 1-53 is evenly coated on both sides of the aluminum foil of the current collector in a coating amount of 0.019 g/cm², vacuum-dried at a high temperature of 100-120°C for 14 h, and compacted by a roller press to obtain the positive electrode plate P48.

The parameters of each of the positive electrode plates above are shown in Table 2.

**Table 2 Parameters of positive electrode plates**

| | Number of positive electrode film layers on A side of aluminum foil | Positive electrode active material on A side of aluminum foil | Number of positive electrode film layers on B side of aluminum foil | Positive electrode active material on B side of aluminu m foil | Thicknes s of positive electrode plate (mm) | Density of positive electrod e plate (g/cm3) | Mass content of first positive electrode active material in positive electrode active material 4 | Mass content of second positive electrode active material in positive electrode active material 4 |
|---|---|---|---|---|---|---|---|---|
| Positive electrode plate P1 | 1 | Example 1-1 | 1 | Example 1-1 | 0.25 | 2.5 | 100% | - |
| Positive electrode plate P2 | 1 | Example 1-34 | 1 | Example 1-34 | 0.25 | 2.5 | - | 100% |
| Positive electrode plate P3 | 1 | Example 1-1 | 1 | Example 1-34 | 0.25 | 2.5 | 50% | 50% |
| Positive electrode plate P4 | 1 | Example 1-35 | 1 | Example 1-35 | 0.25 | 2.5 | 50% | 50% |
| Positive electrode plate P5 | 1 | Example 1-1 | 1 | Example 1-35 | 0.25 | 2.5 | 75% | 25% |
| Positive electrode plate P6 | 1 | Example 1-34 | 1 | Example 1-35 | 0.25 | 2.5 | 25% | 75% |
| Positive electrode plate P7 | 2 | 1st layer* : Example 1-1 | 2 | 1st layer: Example 1-1 | 0.25 | 2.5 | 50% | 50% |
| | | 2nd layer* : Example 1-34 | | 2nd layer: Example 1-34 | | | | |
| Positive electrode plate P8 | 2 | 1st layer: Example 1-34 | 2 | 1st layer: Example 1-34 | 0.25 | 2.5 | 50% | 50% |
| | | 2nd layer: Example 1-1 | | 2nd layer: Example 1-1 | | | | |
| Positive electrode plate P9 | 2 | lst layer: Example 1-1 | 2 | 1st layer: Example 1-1 | 0.25 | 2.5 | 75% | 25% |
| | | 2nd layer: Example 1-35 | | 2nd layer: Example 1-35 | | | | |
| Positive electrode plate P10 | 2 | lst layer: Example 1-35 | 2 | 1st layer: Example 1-35 | 0.25 | 2.5 | 75% | 25% |
| | | 2nd layer: Example 1-1 | | 2nd layer: Example 1-1 | | | | |
| Positive electrode plate P11 | 2 | 1st layer: Example 1-34 | 2 | 1st layer: Example 1-34 | 0.25 | 2.5 | 25% | 75% |
| | | 2nd layer: Example 1-35 | | 2nd layer: Example 1-35 | | | | |
| Positive electrode plate P12 | 2 | lst layer: Example 1-35 | 2 | 1st layer: Example 1-35 | 0.25 | 2.5 | 25% | 75% |
| | | 2nd layer: Example 1-34 | | 2nd layer: Example 1-34 | | | | |
| Positive electrode plate P13 | 2 | lst layer: Example 1-1 | 1 | Example 1-1 | 0.25 | 2.5 | 75% | 25% |
| | | 2nd layer: Example 1-34 | | | | | | |
| Positive electrode plate P14 | 2 | lst layer: Example 1-1 | 1 | Example 1-34 | 0.25 | 2.5 | 25% | 75% |
| | | 2nd layer: Example 1-34 | | | | | | |
| Positive electrode plate P15 | 2 | lst layer: Example 1-1 | 1 | Example 1-35 | 0.25 | 2.5 | 50% | 50% |
| | | 2nd layer: Example 1-34 | | | | | | |
| Positive electrode plate P16 | 2 | 1st layer: Example 1-34 | 1 | Example 1-1 | 0.25 | 2.5 | 75% | 25% |
| | | 2nd layer: Example 1-1 | | | | | | |
| Positive electrode plate P17 | 2 | lst layer: Example 1-34 | 1 | Example 1-34 | 0.25 | 2.5 | 25% | 75% |
| | | 2nd layer: Example 1-1 | | | | | | |
| Positive electrode plate P18 | 2 | lst layer: Example 1-34 | 1 | Example 1-35 | 0.25 | 2.5 | 50% | 50% |
| | | 2nd layer: Example 1-1 | | | | | | |
| Positive electrode plate P19 | 2 | lst layer: Example 1-1 | 1 | Example 1-1 | 0.25 | 2.5 | 87.5% | 12.5% |
| | | 2nd layer: Example 1-35 | | | | | | |
| Positive electrode plate P20 | 2 | lst layer: Example 1-1 | 1 | Example 1-34 | 0.25 | 2.5 | 37.5% | 62.5% |
| | | 2nd layer: Example 1-35 | | | | | | |
| Positive electrode plate P21 | 2 | lst layer: Example 1-1 | 1 | Example 1-35 | 0.25 | 2.5 | 62.5% | 37.5% |
| | | 2nd layer: Example 1-35 | | | | | | |
| Positive electrode plate P22 | 2 | 1st layer: Example1-35 | 1 | Example 1-1 | 0.25 | 2.5 | 87.5% | 12.5% |
| | | 2nd layer: Example 1-1 | | | | | | |
| Positive electrode plate P23 | 2 | lst layer: Example 1-35 | 1 | Example 1-34 | 0.25 | 2.5 | 37.5% | 62.5% |
| | | 2nd layer: Example 1-1 | | | | | | |
| Positive electrode plate P24 | 2 | lst layer: Example 1-35 | 1 | Example 1-35 | 0.25 | 2.5 | 62.5% | 37.5% |
| | | 2nd layer: Example 1-1 | | | | | | |
| Positive electrode plate P25 | 2 | lst layer: Example 1-34 | 1 | Example 1-1 | 0.25 | 2.5 | 62.5% | 37.5% |
| | | 2nd layer: Example 1-35 | | | | | | |
| Positive electrode plate P26 | 2 | lst layer: Example 1-34 | 1 | Example 1-34 | 0.25 | 2.5 | 12.5% | 87.5% |
| | | 2nd layer: Example 1-35 | | | | | | |
| Positive electrode plate P27 | 2 | lst layer: Example 1-34 | 1 | Example 1-35 | 0.25 | 2.5 | 37.5% | 62.5% |
| | | 2nd layer: Example 1-35 | | | | | | |
| Positive electrode plate P28 | 2 | lst layer: Example 1-35 | 1 | Example 1-1 | 0.25 | 2.5 | 62.5% | 37.5% |
| | | 2nd layer: Example 1-34 | | | | | | |
| Positive electrode plate P29 | 2 | lst layer: Example 1-35 | 1 | Example 1-34 | 0.25 | 2.5 | 12.5% | 87.5% |
| | | 2nd layer: Example 1-34 | | | | | | |
| Positive electrode plate P30 | 2 | lst layer: Example 1-35 | 1 | Example 1-35 | 0.25 | 2.5 | 37.5% | 62.5% |
| | | 2nd layer: Example 1-34 | | | | | | |
| Positive electrode plate P31 | 1 | Example 1-36 | 1 | Example 1-36 | 0.25 | 2.5 | - | 100% |
| Positive electrode plate P32 | 1 | Example 1-37 | 1 | Example 1-37 | 0.25 | 2.5 | 50% | 50% |
| Positive electrode plate P33 | 1 | Example 1-38 | 1 | Example 1-38 | 0.25 | 2.5 | - | 100% |
| Positive electrode plate P34 | 1 | Example 1-39 | 1 | Example 1-39 | 0.25 | 2.5 | - | 100% |
| Positive electrode plate P35 | 1 | Example 1-40 | 1 | Example 1-40 | 0.25 | 2.5 | - | 100% |
| Positive electrode plate P36 | 1 | Example 1-41 | 1 | Example 1-41 | 0.25 | 2.5 | - | 100% |
| Positive electrode plate P37 | 1 | Example 1-42 | 1 | Example 1-42 | 0.25 | 2.5 | - | 100% |
| Positive electrode plate P38 | 1 | Example 1-43 | 1 | Example 1-43 | 0.25 | 2.5 | - | 100% |
| Positive electrode plate P39 | 1 | Example 1-44 | 1 | Example 1-44 | 0.25 | 2.5 | - | 100% |
| Positive electrode plate P40 | 1 | Example 1-45 | 1 | Example 1-45 | 0.25 | 2.5 | - | 100% |
| Positive electrode plate P41 | 1 | Example 1-46 | 1 | Example 1-46 | 0.25 | 2.5 | 50% | 50% |
| Positive electrode plate P42 | 1 | Example 1-47 | 1 | Example 1-47 | 0.25 | 2.5 | 50% | 50% |
| Positive electrode plate P43 | 1 | Example 1-48 | 1 | Example 1-48 | 0.25 | 2.5 | 50% | 50% |
| Positive electrode plate P44 | 1 | Example 1-49 | 1 | Example 1-49 | 0.25 | 2.5 | 50% | 50% |
| Positive electrode plate P45 | 1 | Example 1-50 | 1 | Example 1-50 | 0.25 | 2.5 | 50% | 50% |
| Positive electrode plate P46 | 1 | Example 1-51 | 1 | Example 1-51 | 0.25 | 2.5 | 50% | 50% |
| Positive electrode plate P47 | 1 | Example 1-52 | 1 | Example 1-52 | 0.25 | 2.5 | 50% | 50% |
| Positive electrode plate P48 | 1 | Example 1-53 | 1 | Example 1-53 | 0.25 | 2.5 | 50% | 50% |

| | | | | | | | | |
|---|---|---|---|---|---|---|---|---|
| "*": The 1st layer refers to a layer in contact with the surface of the aluminum foil, and the 2nd layer refers to a layer provided on the 1st layer. "#": The first positive electrode active material is the positive electrode active material prepared in example 1-1, and the second positive electrode active material is the positive electrode active material in example 1-34, example 1-36, and example 1-38 to example 1-45. | | | | | | | | |

### Preparation of negative electrode plate

A negative electrode active material artificial graphite, a conductive agent superconducting carbon black (Super-P), a binder styrene butadiene rubber (SBR) and a thickening agent sodium carboxymethylcellulose (CMC-Na) are dissolved in deionized water in a mass ratio of 95% : 1.5% : 1.8% : 1.7%, followed by fully stirring and uniformly mixing to obtain a negative electrode slurry with a viscosity of 3000 mPa s and a solid content of 52%; the negative electrode slurry is coated on a negative electrode current collector copper foil with a thickness of 6 µm, and then baked at 100°C for 4 hours for drying, followed by roll pressing to obtain the negative electrode plate with a compacted density of 1.75 g/cm³.

### Separator

a polypropylene film is used.

### Preparation of electrolyte solution

Ethylene carbonate, dimethyl carbonate and 1,2-propylene glycol carbonate are mixed in a volume ratio of 1 : 1 : 1, and then LiPF₆ is evenly dissolved in the above solution to obtain an electrolyte solution. In the electrolyte solution, the concentration of LiPF₆ is 1 mol/L.

### Preparation of full battery

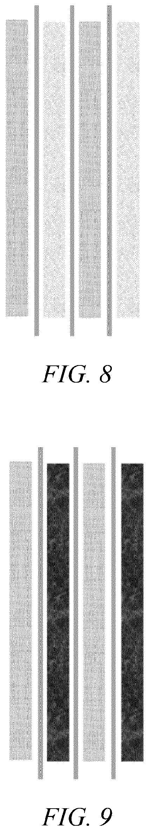

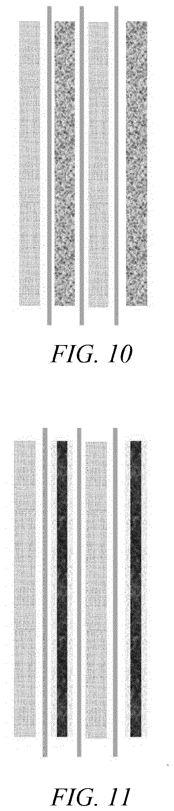

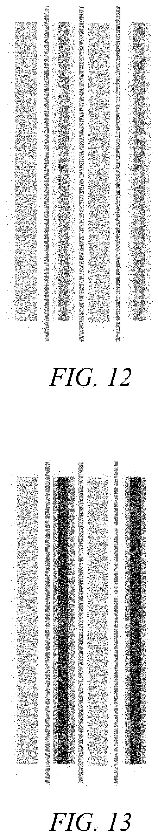

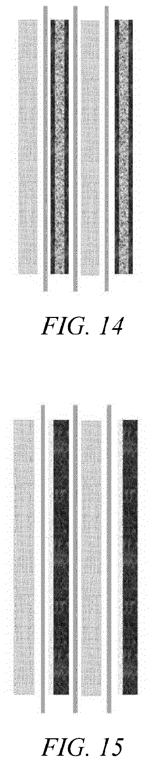

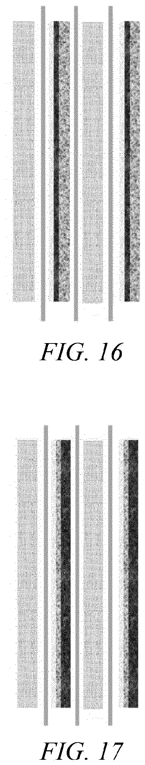

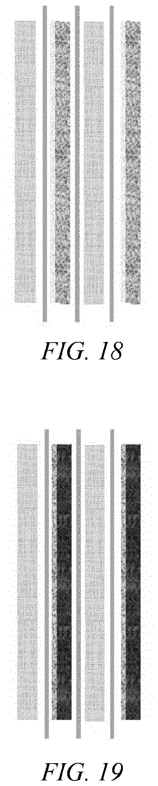

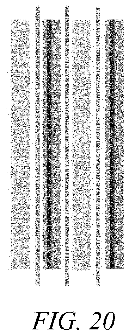

the above positive electrode plate is used, and a bare cell is formed by a winding method according to the sequence of a negative electrode plate, a separator, and a positive electrode plate, and aluminum tabs and copper tabs are respectively punched out to obtain the bare cell; Copper and copper tabs, and aluminum and aluminum tabs of two bare cells are welded together to the top cover of the battery via an adapter. After the bare cells are wrapped and insulated, the bare cells are put into an aluminum shell, and the top cover and the aluminum shell are welded to form a dry cell. The dry cell is baked to remove water and then injected with an electrolyte solution, and the battery is formed and aged to obtain a full battery accordingly. The structure of the battery made of the positive electrode plates P1, P2, P3, P8, P10, P11, P12, P17, P18, P23, P24, P26, and P27 is shown in FIGs. 8-20.

### Preparation of button battery

The positive electrode active material prepared above, PVDF and acetylene black are added in a weight ratio of 90 : 5 : 5 to NMP, and stirred in a drying room to make a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate is used as a negative electrode, a solution of 1 mol/L LiPF₆ in ethylene carbonate (EC), diethyl carbonate (DEC) and dimethyl carbonate (DMC) in a volume ratio of 1 : 1 : 1 is used as an electrolyte solution, and the lithium plate and the electrolyte solution are assembled, together with the positive electrode plate prepared above, into a button battery in a button battery box.

### Property test of positive electrode active material

### 1. Determination of the chemical formula of the inner core and the composition of different coating layers:

A spherical aberration corrected transmission electron microscope (ACSTEM) is used to characterize the internal microstructure and surface structure of the positive electrode active material with high spatial resolution, and is combined with three-dimensional reconstruction technology to obtain the chemical formula of the inner core and the composition of the first and second coating layers of the positive electrode active material.

### 2. Test of initial gram capacity of button battery:

At 2.5-4.3 V, a button battery prepared as described above is charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, which is recorded as DO.

### 3. Average discharge voltage (V) test of button battery:

The button battery prepared above is allowed to stand for 5 min at a constant temperature of 25°C, discharged at 0.1C to 2.5 V, allowed to stand for 5 min, charged at 0.1C to 4.3 V, and then charged at a constant voltage of 4.3 V until the current is less than or equal to 0.05 mA, and allowed to stand for 5 min; then discharged at 0.1C to 2.5 V, the discharge capacity at this moment is the initial gram capacity, which is recorded as DO; the discharge energy is the initial energy, which is recorded as E0; so the average discharge voltage V of the button battery is EO/DO.

### 4. Test of expansion of full battery at 60°C:

At 60°C, the full battery with 100% SOC (State of Charge) prepared above is stored. Before and after and during the storage, the open-circuit voltage (OCV) and AC internal impedance (IMP) of a cell are measured for monitoring the SOC, and the volume of the cell is measured. Herein, the full battery is taken out after every 48 h of storage, and allowed to stand for 1 h, then the OCV and internal IMP are measured, and the cell volume is tested with the displacement method after the full battery is cooled to room temperature. The displacement method means that the gravity F₁ of the cell is measured separately using a balance of which the on-board data is subjected to automatic unit conversion, then the cell is completely placed in deionized water (with a density known as 1 g/cm³), the gravity F₂ of the cell at this moment is measured, the buoyancy F_{buoyancy} on the cell is F₁ - F₂, and then the cell volume V = (F₁ - F₂)/(ρ × g) is calculated according to the Archimedes principle F_{buoyancy} = ρ × g × V_{displaced}.

From the test results of OCV and IMP, the battery of all the example always maintains a SOC of no less than 99% in the experimental process till the end of the storage.

After 30 days of storage, the cell volume is measured, and a percentage increase in cell volume after the storage relative to the cell volume before the storage is calculated.

In addition, residual capacity of the cell is measured. At 2.5 to 4.3 V, the full battery is charged at 1C to 4.3 V, and then charged at a constant voltage of 4.3 V until the current is less than or equal to 0.05 mA. The full battery is allowed to stand for 5 min, and the charge capacity at this moment is recorded as the residual capacity of the cell.

### 5. Test of cycling performance of full battery at 45°C:

In a constant-temperature environment at 45°C, at 2.5-4.3 V, the full battery prepared above is charged at 1C to 4.3 V, and then charged at a constant voltage of 4.3 V until the current is less than or equal to 0.05 mA. The full battery is allowed to stand for 5 min, and then discharged at 1C to 2.5V, and the discharge capacity at this moment is recorded as D0. The above-mentioned charging and discharging cycle is repeated until the discharge capacity is reduced to 80% of DO. The number of cycles experienced by the battery at this moment is recorded.

### 6. Test of lattice change rate:

In a constant-temperature environment at 25°C, a positive electrode active material sample prepared as described above is placed in an XRD (model: Bruker D8 Discover) and tested at l°/min, and the test data are organized and analyzed; and with reference to the standard PDF card, lattice constants a0, bO, c0 and v0 at this moment are calculated (a0, b0 and c0 represent the lengths of a unit cell on all sides, and v0 represents the volume of the unit cell, which may be obtained directly from XRD refinement results).

By using the method for preparing a button battery described above, the positive electrode active material sample is made into the button battery, and the button battery is charged at a small rate of 0.05C until the current is reduced to 0.01C. Then a positive electrode plate in the button battery is taken out and soaked in dimethyl carbonate (DMC) for 8 h. Then the positive electrode plate is dried, powder is scraped off, and particles with a particle size of less than 500 nm are screened out. Sampling is performed, and a unit cell volume v1 is calculated in the same way as that for testing the fresh sample as described above. (v0 - vl)/v0 × 100% is shown in a table as a lattice change rate (unit cell volume change rate) of the sample before and after complete lithium intercalation-deintercalation.

### 7. Test of Li/Mn antisite defect concentration:

The XRD results tested in the "Method for measuring lattice change rate" are compared with the PDF (Powder Diffraction File) card of a standard crystal, so as to obtain a Li/Mn antisite defect concentration. Specifically, the XRD results tested in the "Method for measuring lattice change rate" are imported into a general structure analysis system (GSAS) software, and refinement results are obtained automatically, including the occupancies of different atoms; and an Li/Mn antisite defect concentration is obtained by reading the refinement results.

### 8. Test of dissolution of transition metals:

A full battery after cycling to 80% attenuated capacity at 45°C is discharged to a cut-off voltage of 2.0 V at a rate of 0.1C. Then the battery is disassembled, a negative electrode plate is taken out, a round piece of 30 unit areas (1540.25 mm²) is randomly taken from the negative electrode plate, and inductively coupled plasma (ICP) emission spectroscopy is tested with Agilent ICP-OES730. The amounts of Fe (if the Mn position of the positive electrode active material is doped with Fe) and Mn therein are calculated according to the ICP results, and then the dissolution of Mn (and Fe doping the Mn position) after cycling is calculated. The testing standard is in accordance with EPA-601OD-2014.

### 9. Test of surface oxygen valence state:

5 g of the positive electrode active material sample prepared as described above is made into a button battery according to the above method for preparing a button battery. The button battery is charged at a small rate of 0.05C until the current is reduced to 0.01C. Then a positive electrode plate in the button battery is taken out and soaked in dimethyl carbonate (DMC) for 8 h. Then the positive electrode plate is dried, powder is scraped off, and particles with a particle size of less than 500 nm are screened out. The obtained particles are measured with electron energy loss spectroscopy (EELS, instrument model used: Tales F200S), so as to obtain an energy loss near-edge structure (ELNES) which reflects the density of states and energy level distribution of an element. According to the density of states and energy level distribution, the number of occupied electrons is calculated by integrating the data of valence-band density of states, and then a valence state of surface oxygen after the charging is extrapolated.

### 10. Measurement of compacted density:

5 g of positive electrode active material powder prepared above is put into a compaction dedicated mold (U.S. CARVER mold, model: 13 mm), and then the mold is placed on a compacted density instrument. A pressure of 3 T is exerted, the thickness (thickness after pressure relief, area of a container for testing is 1540.25 mm²) of the powder under pressure is read from the instrument, and a compacted density is calculated through ρ = m/v.

### 11. Test of the crystallinity of pyrophosphate and phosphate by X-ray diffraction

5 g of the positive electrode active material powder prepared above is taken and measured for total scattering intensity by X-rays, which is the sum of the scattering intensity of the entire space material, and is only related to the intensity of the primary ray, the chemical structure, and the total number of electrons participating in the diffraction, that is, the mass, but has nothing to do with the order of the sample; then the crystalline scattering and non-crystalline scattering are separated from the diffraction pattern, and the degree of crystallinity is the ratio of the scattering of the crystalline part to the total intensity of the scattering.

### 12. Interplanar spacing and angle

1 g of each positive electrode active material powder prepared above is placed in a 50 mL test tube, and 10 mL of alcohol with a mass fraction of 75% is injected into the test tube, then fully stirred and dispersed for 30 min, and then a clean disposable plastic dropper is used to take an appropriate amount of the solution, which is dripped on a 300-mesh copper mesh, and at this moment, part of the powder will remain on the copper mesh. The copper mesh and the sample are transferred to TEM (Tales F200s G2) sample chamber for testing, the original picture of the TEM test is obtained and the original picture format (xx.dm3) is saved.

The original picture obtained from the above TEM test is opened in Digital Micrograph software, and Fourier transform (automatically completed by the software after the clicking operation) is performed to obtain a diffraction pattern, and the distance from the diffraction spot to the central position in the diffraction pattern is measured to obtain the interplanar spacing, and the angle is calculated according to the Bragg equation.

The above results are shown in Tables 3-6.

**Table 3 Results of performance test of examples 1-1 to 1-33 and comparative examples 1-7**

| No. | Inner core | First coating layer | Seco nd coati ng layer | Latti ce chan ge rate (%) | Li/Mn antisite defect concentrati on/% | Dissolu tion of Fe and Mn after cycling (ppm) | Surfa ce oxyg en valen ce state | Compa cted density (g/cm³) | Gram capac ity of butto n batter y at 0. ic (mAh /g) | Avera ge discha rge voltag e of button batter y (V) | Expan sion of cell when stored at 60°C for 30 d (%) | Number of cycles correspon ding to 80% capacity retention rate at 45°C |
|---|---|---|---|---|---|---|---|---|---|---|---|---|
| Example 1-1 | Li_{0.999}Mn_{0.60}Fe_{0.393}V_{0.004}Co_{0.003} P_{0.999}S_{0.001}O₄ | 1% of Li₂FeP₂O₇/ 3% of LiFeP04 | 2% of carb on | 2.4 | 0.4 | 8 | -1.98 | 2.41 | 158.2 | 3.78 | 1.9 | 1328 |
| Example 1-2 | Li_{0.999}Mn_{0.60}Fe_{0.40}P_{0.999}S_{0.001}O₄ | 0.8% of Li₂FeP₂O₇/ 2.4% of LiFeP04 | 1% of carb on | 6.6 | 1.2 | 63 | -1.97 | 2.43 | 148.9 | 3.75 | 6.4 | 804 |
| Example 1-3 | Li_{0.999}Mn_{0.60}Fe_{0.40}P_{0.999}S_{0.001}O₄ | 1% of Li₂FeP₂O₇/ 3% of LiFeP04 | 1% of carb on | 6.5 | 1.1 | 48 | -1.97 | 2.45 | 148.5 | 3.74 | 5.3 | 918 |
| Example 1-4 | Li_{0.999}Mn_{0.60}Fe_{0.40}P_{0.999}S_{0.001}O₄ | 1.2% of Li₂FeP₂O₇/ 3.6% of LiFeP04 | 1% of carb on | 6.5 | 0.8 | 32 | -1.97 | 2.44 | 147.3 | 3.73 | 4.8 | 968 |
| Example 1-5 | Li_{0.999}Mn_{0.60}Fe_{0.40}P_{0.999}S_{0.001}O₄ | 1.4% of Li₂FeP₂O₇/ 4.2% of LiFeP04 | 1% of carb on | 6.5 | 0.7 | 20 | -1.98 | 2.45 | 146.8 | 3.73 | 3.6 | 1064 |
| Example 1-6 | Li_{0.999}Mn_{0.60}Fe_{0.40}P_{0.999}S_{0.001}O₄ | 1.6% of Li₂FeP₂O₇/ 4.8% of LiFeP04 | 1% of carb on | 6.6 | 0.6 | 15 | -1.98 | 2.45 | 145.9 | 3.72 | 2.8 | 1189 |
| Example 1-7 | Li_{0.999}Mn_{0.60}Fe_{0.40}P_{0.999}S_{0.001}O₄ | 1% of Li₂FeP₂O₇/ 3% of LiFePO₄ | 2% of carbon | 6.5 | 1.0 | 42 | -1.97 | 2.46 | 147.5 | 3.73 | 4.8 | 968 |
| Example 1-8 | Li_{0.999}Mn_{0.60}Fe_{0.40}P_{0.999}S_{0.001}O₄ | 1% of Li₂FeP₂O₇/ 3% of LiFePO₄ | 4% of carb on | 6.5 | 1.0 | 38 | -1.97 | 2.47 | 146.4 | 3.73 | 4.3 | 1012 |
| Example 1-9 | Li_{0.999}Mn_{0.60}Fe_{0.40}P_{0.999}S_{0.001}O₄ | 1% of Li₂FeP₂O₇/ 3% of LiFePO₄ | 5% of carb on | 6.4 | 1.1 | 29 | -1.98 | 2.44 | 144.3 | 3.73 | 3.7 | 1108 |
| Example 1-10 | Li_{0.999}Mn_{0.60}Fe_{0.40}P_{0.999}S_{0.001}O₄ | 1% of Li₂FeP₂O₇/ 3% of LiFePO₄ | 6% of carb on | 6.4 | 1.1 | 18 | -1.98 | 2.41 | 142.1 | 3.73 | 2.8 | 1219 |
| Example 1-11 | Li_{0.999}Mn_{0.60}Fe_{0.40}P_{0.999}S_{0.001}O₄ | 1.5% of Li₂FeP₂O₇/ 2.5% of LiFePO₄ | 2% of carb on | 6.5 | 1.1 | 34 | -1.97 | 2.44 | 147.8 | 3.74 | 5.2 | 927 |
| Example 1-12 | Li_{0.999}Mn_{0.60}Fe_{0.40}P_{0.999}S_{0.001}O₄ | 2% of Li₂FeP₂O₇/ 2% of LiFePO₄ | 2% of carb on | 6.6 | 1.0 | 22 | -1.96 | 2.47 | 147.6 | 3.74 | 6.1 | 897 |
| Example 1-13 | Li_{0.999}Mn_{0.60}Fe_{0.40}P_{0.999}S_{0.001}O₄ | 2.5% of Li₂FeP₂O₇/ 1.5% of LiFePO₄ | 2% of carb on | 6.7 | 1.2 | 18 | -1.96 | 2.46 | 147.2 | 3.74 | 6.9 | 816 |
| Example 1-14 | Li_{0.999}Mn_{0.60}Fe_{0.40}P_{0.999}S_{0.001}O₄ | 3% of Li₂FeP₂O₇/ 1% of LiFePO₄ | 2% of carb on | 6.7 | 1.1 | 9 | -1.97 | 2.45 | 147.0 | 3.75 | 7.5 | 764 |
| Example 1-15 | Li_{0.999}Mn_{0.60}Zn_{0.40}P_{0.999}S_{0.001}O₄ | 3% of Li₂FeP₂O₇/ 1% of LiFePO₄ | 2% of carb on | 7.5 | 2.5 | 18 | -1.97 | 2.45 | 138.7 | 3.86 | 8.4 | 857 |
| Example 1-16 | Li_{0.993}Mn_{0.6}Ni_{0.393}Zn_{0.004}Ti_{0.003} P_{0.999}S_{0.001}O₄ | 1% of Li₂FeP₂O₇/ 3% of LiFePO₄ | 2% of carb on | 5.4 | 0.8 | 14 | -1.97 | 2.44 | 139.4 | 3.86 | 4.5 | 974 |
| Example 1-17 | Li_{0.999}Mn_{0.60}Fe_{0.393}V_{0.007}P_{0.999}S _{0.001}O₄ | 1% of Li₂FeP₂O₇/3% of LiFePO₄ | 2% of carb on | 4.2 | 0.6 | 13 | -1.97 | 2.45 | 153.2 | 3.78 | 3.2 | 1241 |
| Example 1-18 | Li_{0.999}Mn_{0.60}Fe_{0.393}V_{0.004}Mg_{0.00 3}P_{0.999}S_{0.001}O₄ | 1% of Li₂FeP₂O₇/ 3% of LiFePO₄ | 2% of carb on | 2.6 | 0.5 | 10 | -1.97 | 2.45 | 155.6 | 3.80 | 2.7 | 1245 |
| Example 1-19 | LiMn_{0.60}Fe_{0.393}V_{0.004}Mg_{0.003}P_{0.999}N_{0.001}O₄ | 1% of Li₂FeP₂O₇/ 3% of LiFePO₄ | 2% of carb on | 2.3 | 0.5 | 9 | -1.98 | 2.45 | 157.6 | 3.80 | 2.1 | 1349 |
| Example 1-20 | Li_{1.001}Mn_{0.60}Fe_{0.393}V_{0.004}Mg_{0.00 3}P_{0.999}Si_{0.001}O₄ | 1% of Li₂FeP₂O₇/ 3% of LiFePO₄ | 2% of carb on | 2.4 | 0.7 | 11 | -1.98 | 2.44 | 157.4 | 3.80 | 2.4 | 1368 |
| Example 1-21 | Li_{1.001}Mn_{0.55}Fe_{0.40}V_{0.025}Mg_{0.025} P_{0.999}Si_{0.001}O₄ | 1% of Li₂FeP₂O₇/ 3% of LiFePO₄ | 2% of carb on | 2.2 | 0.5 | 8 | -1.98 | 2.43 | 158.4 | 3.72 | 2.0 | 1459 |
| Example 1-22 | Li_{1.001}Mn_{0.65}Fe_{0.25}V_{0.05}Mg_{0.05}P_{0 .999}Si_{0.001}O₄ | 1% of Li₂FeP₂O₇/ 3% of LiFePO₄ | 2% of carb on | 2.5 | 0.8 | 12 | -1.98 | 2.42 | 156.9 | 3.83 | 2.8 | 1283 |
| Example 1-23 | Li_{1.004}Mn_{0.7}FC_{0.2}V_{0.05}Mg_{0.05}P_{0.9 98}B_{0.002}O₄ | 1% of Li₂FeP₂O₇/ 3% of LiFePO₄ | 2% of carb on | 2.6 | 0.8 | 11 | -1.98 | 2.43 | 157.1 | 3.83 | 2.5 | 1268 |
| Example 1-24 | Li_{1.006}Mn_{0.75}Fe_{0.15}V_{0.05}Mg_{0.05}P_{0 .997}B_{0.003}O₄ | 1% of Li₂FeP₂O₇/ 3% of LiFePO₄ | 2% of carb on | 2.6 | 0.8 | 10 | -1.98 | 2.44 | 157.4 | 3.83 | 2.6 | 1329 |
| Example 1-25 | Li_{1.002}Mn_{0.60}Fe_{0.393}V_{0.004}Mg_{0.00 3}P_{0.998}Si_{0.002}O₄ | 1% of Li₂FeP₂O₇/ 3% of LiFePO₄ | 2% of carb on | 2.3 | 0.7 | 10 | -1.98 | 2.45 | 157.3 | 3.78 | 2.4 | 1369 |
| Example 1-26 | Li_{0.993}Mn_{0.80}Fe_{0.194}V_{0.003}Mg_{0.00 3}P_{0.997}S_{0.003}O₄ | 1% of Li₂FeP₂O₇/ 3% of LiFePO₄ | 2% of carb on | 2.8 | 0.9 | 12 | -1.98 | 2.45 | 156.1 | 3.85 | 2.9 | 1128 |
| Example 1-27 | Li_{0.996}Mn_{0.60}Fe_{0.393}V_{0.004}Mg_{0.003}P_{0.996}S_{0.004}O₄ | 1% of Li₂FeP₂O₇/ 3% of LiFePO₄ | 2% of carb on | 2.2 | 0.6 | 11 | -1.98 | 2.46 | 157.5 | 3.78 | 2.4 | 1394 |
| Example 1-28 | Li_{0.995}Mn_{0.9}Fe_{0.094}V_{0.003}Mg_{0.003} P_{0.995}S_{0.005}O₄ | 1% of Li₂FeP₂O₇/ 3% of LiFeP04 | 2% of carb on | 3.2 | 1.1 | 13 | -1.96 | 2.45 | 156.8 | 3.89 | 3.2 | 1089 |
| Example 1-29 | Li_{0.994}Mn_{0.90}Fe_{0.094}V_{0.003}Mg_{0.00 3}P_{0.994}S_{0.006}O₄ | 1% of Li₂FeP₂O₇/ 3% of LiFePO₄ | 2% of carb on | 3.0 | 1.2 | 14 | -1.95 | 2.44 | 156.1 | 3.89 | 3.2 | 1038 |
| Example 1-30 | Li_{0.993}Mn_{0.90}Fe_{0.094}V_{0.003}Mg_{0.00 3}P_{0.993}S_{0.007}O₄ | 1% of Li₂FeP₂O₇/ 3% of LiFePO₄ | 2% of carb on | 2.8 | 1.4 | 16 | 1.9 5 | 2.45 | 155.8 | 3.89 | 3.1 | 948 |
| Example 1-31 | Li_{0.992}Mn_{0.90}Fe_{0.094}V_{0.003}Mg_{0.00 3}P_{0.992}S_{0.008}O₄ | 1% of Li₂FeP₂O₇/ 3% of LiFePO₄ | 2% of carb on | 2.6 | 1.4 | 17 | 1.9 4 | 2.44 | 155.4 | 3.89 | 3.0 | 917 |
| Example 1-32 | Li_{0.991}Mn_{0.90}Fe_{0.094}V_{0.003}Mg_{0.00 3}P_{0.991}S_{0.009}O₄ | 1% of Li₂FeP₂O₇/ 3% of LiFePO₄ | 2% of carb on | 2.4 | 1.2 | 18 | 1.9 4 | 2.45 | 154.8 | 3.89 | 2.8 | 897 |
| Example 1-33 | Li_{0.9}Mn_{0.90}Fe_{0.094}V_{0.003}Mg_{0.003}P _{0.9}S_{0.1}O₄ | 1% of Li₂FeP₂O₇/ 3% of LiFePO₄ | 2% of carb on | 2.1 | 0.9 | 20 | 1.9 4 | 2.44 | 154.5 | 3.89 | 2.7 | 879 |
| Compar ative example 1 | LiMnPO₄ | - | 1% of carb on | 11.4 | 3.2 | 2060 | 1.5 5 | 1.81 | 125.6 | 4.02 | 48.6 | 185 |
| Compar ative example 2 | LiMn_{0.60}Fe_{0.40}PO₄ | - | 1% of carb on | 8.7 | 2.8 | 1597 | 1.7 6 | 1.92 | 134.8 | 3.76 | 42.5 | 358 |
| Compar ative example 3 | Li_{0.999}MnP_{0.999}S_{0.001}O₄ | - | 1% of carb on | 9.8 | 2.5 | 1895 | 1.6 6 | 1.88 | 128.6 | 4.05 | 45.5 | 267 |
| Compar ative example 4 | Li_{0.999}Mn_{0.60}Fe_{0.40}P_{0.999}S_{0.001}O₄ | - | 1% of carb on | 6.7 | 1.8 | 1279 | 1.8 3 | 1.82 | 140.5 | 3.78 | 38.5 | 417 |
| Compar ative example 5 | Li_{0.999}Mn_{0.60}Fe_{0.40}P_{0.999}S_{0.001}O₄ | 4% of amorphous Li₂FeP₂O₇ | 1% of carb on | 6.5 | 1.8 | 208 | - 1.9 0 | 1.79 | 140.3 | 3.73 | 12.5 | 519 |
| Compar ative example 6 | Li_{0.999}Mn_{0.60}Fe_{0.40}P_{0.999}S_{0.001}O₄ | 4% of amorphous LiFePO₄ | 1% of carb on | 6.6 | 1.8 | 318 | - 1.9 1 | 1.83 | 140.2 | 3.74 | 11.5 | 528 |
| Compar ative example 7 | Li_{0.999}Mn_{0.60}Fe_{0.40}P_{0.999}S_{0.001}O₄ | 1% of amorphous Li₂FeP₂O₇ +3% of amorphous LiFePO₄ | 1% of carb on | 6.6 | 1.8 | 174 | 1.9 0 | 1.84 | 140.1 | 3.75 | 8.6 | 682 |
| | Note: 1) the crystallinity of Li₂FeP₂O₇ and that of LiFePO₄ in examples 1-1 to 1-33 are both 100%; and 2) in comparative examples 5-7, the crystallinity of Li₂FeP₂O₇ is 5%, and the crystallinity of LiFePO₄ is 8%. | | | | | | | | | | | |

From the combination of examples 1-1 to 1-33 and comparative examples 1-4, it can be seen that the existence of the first coating layer is beneficial to reducing the Li/Mn antisite defect concentration of the obtained material and the dissolution of Fe and Mn after cycling, increasing the gram capacity of button battery of the battery, and improving the safety performance and cycling performance of the battery. When other elements are doped on the Mn site and phosphorus site respectively, the lattice change rate, antisite defect concentration and Fe and Mn dissolution of the obtained material can be significantly reduced, the gram capacity of the battery can be increased, and the safety performance and cycling performance of the battery can be improved.

From the combination of examples 1-1 to 1-6, it can be seen that with the increase of the amount of the first coating layer from 3.2% to 6.4%, the Li/Mn antisite defect concentration of the obtained material gradually decreases, the dissolution of Fe and Mn gradually decreases after cycling, and the safety performance and cycling performance at 45°C of the corresponding battery are also improved, but the gram capacity of the button battery decreases slightly. Optionally, when the total amount of the first coating layer is 4-5.6 wt%, the overall performance of the corresponding battery is the best.

From the combination of example 1-3 and examples 1-7 to 1-10, it can be seen that with the increase of the amount of the second coating layer from 1% to 6%, the Li/Mn antisite defect concentration of the obtained material gradually decreases, the dissolution of Fe and Mn gradually decreases after cycling, and the safety performance and cycling performance at 45°C of the corresponding battery are also improved, but the gram capacity of the button battery decreases slightly. Optionally, when the total amount of the second coating layer is 3-5 wt%, the overall performance of the corresponding battery is the best.

From the combination of examples 1-11 to 1-15 and comparative examples 5-6, it can be seen that when Li₂FeP₂O₇ and LiFePO₄ exist simultaneously in the first coating layer, especially the weight ratio of Li₂FeP₂O₇ to LiFePO₄ is 1 : 3 to 3 : 1, and especially 1 : 3 to 1 : 1, the improvement of battery performance is more obvious.

**Table 4 Results of performance test of examples 2-1 to 2-4**

| Example No. | First coating layer | Crystallinity of pyrophosphate and phosphate¹ | Lattice change rate (%) | Li/Mn antisite defect concentration/% | Dissolution of Fe and Mn after cycling (ppm) | Surface oxygen valence state | Capacity of button battery at 0.1C (mAh/g) | Average discharge voltage of button battery (V) | Expansion of cell when stored at 60°C for 30 d (%) | Cycling capacity retention rate at 45°C |
|---|---|---|---|---|---|---|---|---|---|---|
| Example 2-1 | 1% of Li₂FeP₂O₇/3% of LiFePO₄ | 30% | 6.3 | 1.9 | 147 | -1.88 | 145.2 | 3.72 | 5.6 | 698 |
| Example 2-2 | 1% of Li₂FeP₂O₇/3% of LiFePO₄ | 50% | 4.7 | 1.2 | 97 | -1.89 | 149.2 | 3.74 | 4.7 | 869 |
| Example 2-3 | 1% of Li₂FeP₂O₇/3% of LiFePO₄ | 70% | 3.5 | 0.8 | 29 | -1.91 | 151.3 | 3.75 | 3.8 | 1027 |
| Example 2-4 | 1% of Li₂FeP₂O₇/3% of LiFePO₄ | 100% | 2.4 | 0.4 | 8 | -1.98 | 158.2 | 3.79 | 1.9 | 1328 |
| | ¹: refers to the crystallinity of Li₂FeP₂O₇ and LiFePO₄ is 30%, 50%, 70%, and 100%, respectively. | | | | | | | | | |

It can be seen from Table 4 that as the crystallinity of pyrophosphate and phosphate in the first coating layer gradually increases, the lattice change rate, Li/Mn antisite defect concentration, and dissolution of Fe and Mn of the corresponding material gradually decrease, the button battery capacity of the battery is gradually increased, and the safety performance and cycling performance are also gradually improved.

**Table 5 Results of performance test of examples 3-1 to 3-12**

| Examp le No. | Doping element type and doping amount | Temperat ure in reaction kettle(°C) | Stirrin 9 time/m in | Latti ce chan ge rate (%) | Li/Mn antisite defect concentratio n/% | Dissoluti on of Fe and Mn after cycling (ppm) | Surfa ce oxyge n valen ce state | Capaci ty of button battery at 0.1C (mAh/ g) | Averag e dischar ge voltage of button battery (V) | Expansi on of cell when stored at 60°C for 30 d (%) | Numb er of cycles for capacit y retenti on rate of 80% at 45°C |
|---|---|---|---|---|---|---|---|---|---|---|---|
| Examp le 3-1 | Li_{0.999}Mn_{0.60}Fe_{0.393}V_{0.004}Co_{0.003}P_{0.99 9}S_{0.001}O₄ | 60 | 120 | 5.6 | 2.4 | 49 | -1.98 | 155.2 | 3.67 | 5.6 | 1102 |
| Examp le 3-2 | Li_{0.999}Mn_{0.60}Fe_{0.393}V_{0.004}Co_{0.003}P_{0.99 9}S_{0.001}O₄ | 70 | 120 | 4.8 | 1.9 | 37 | -1.98 | 155.7 | 3.69 | 4.7 | 1203 |
| Examp le 3-3 | Li_{0.999}Mn_{0.60}Fe_{0.393}V_{0.004}Co_{0.003}P_{0.99 9}S_{0.001}O₄ | 80 | 120 | 3.7 | 1.3 | 28 | -1.98 | 156.4 | 3.72 | 3.8 | 1275 |
| Examp le 3-4 | Li_{0.999}Mn_{0.60}Fe_{0.393}V_{0.004}Co_{0.003}P_{0.99 9}S_{0.001}O₄ | 90 | 120 | 2.9 | 1.1 | 17 | -1.98 | 157.8 | 3.75 | 3.1 | 1305 |
| Examp le 3-5 | Li_{0.999}Mn_{0.60}Fe_{0.393}V_{0.004}Co_{0.003}P_{0.99 9}S_{0.001}O₄ | 100 | 120 | 2.5 | 0.5 | 9 | -1.98 | 158.5 | 3.78 | 2.4 | 1327 |
| Examp le 3-6 | Li_{0.999}Mn_{0.60}Fe_{0.393}V_{0.004}Co_{0.003}P_{0.99 9}S_{0.001}O₄ | 110 | 120 | 2.8 | 1.2 | 19 | -1.98 | 156.7 | 3.73 | 3.6 | 1257 |
| Examp le 3-7 | Li_{0.999}Mn_{0.60}Fe_{0.393}V_{0.004}Co_{0.003}P_{0.99 9}S_{0.001}O₄ | 120 | 120 | 3.7 | 2.1 | 38 | -1.98 | 154.8 | 3.69 | 4.8 | 1179 |
| Examp le 3-8 | Li_{0.999}Mn_{0.60}Fe_{0.393}V_{0.004}Co_{0.003}P_{0.99 9}S_{0.001}O₄ | 130 | 120 | 4.5 | 3.4 | 46 | -1.98 | 153.7 | 3.64 | 6.3 | 986 |
| Examp le 3-9 | Li_{0.999}Mn_{0.60}Fe_{0.393}V_{0.004}Co_{0.003}P_{0.99 9}S_{0.001}O₄ | 100 | 60 | 4.9 | 3.1 | 38 | -1.98 | 155.4 | 3.76 | 4.9 | 1021 |
| Examp le 3-10 | Li_{0.999}Mn_{0.60}Fe_{0.393}V_{0.004}Co_{0.003}P_{0.99 9}S_{0.001}O₄ | 100 | 90 | 4.1 | 2.5 | 27 | -1.98 | 156.3 | 3.77 | 4.2 | 1097 |
| Examp le 3-11 | Li_{0.999}Mn_{0.60}Fe_{0.393}V_{0.004}Co_{0.003}P_{0.99 9}S_{0.001}O₄ | 100 | 150 | 3.5 | 1.1 | 15 | -1.98 | 157.8 | 3.79 | 3.1 | 1184 |
| Examp le 3-12 | Li_{0.999}Mn_{0.60}Fe_{0.393}V_{0.004}Co_{0.003}P_{0.99 9}S_{0.001}O₄ | 100 | 180 | 2.5 | 0.5 | 11 | -1.98 | 158.1 | 3.79 | 2.4 | 1297 |
| Note | 1. The temperature and stirring time in the reaction kettle are the parameters during the preparation of element A doped manganese oxalate (i.e., step (1)). | | | | | | | | | | |

It can be seen from Table 5 that by adjusting the reaction temperature and reaction time in the reaction kettle during the preparation of manganese oxalate particles, various performances of the positive electrode material of the present application can be further improved. For example, when the reaction temperature gradually increases from 60°C to 130°C, the lattice change rate and Li/Mn antisite defect concentration first decreases and then increases, and the corresponding metal dissolution and safety performance after cycling also show similar rules, while the button battery capacity and cycling performance first increase and then decrease with the increase of temperature. Keeping the reaction temperature constant and adjusting the reaction time can also show a similar rule.

**Table 6 Results of performance test of examples 4-1 to 4-7 and comparative examples 8-11**

| No. | Li₂FeP₂ O₇ : LiFeP04 (weight ratio) | Drying temperatu re (°C) | Dry in g time (h) | Sintering temperatu re (°C) | Sinterin g time (h) | Lattice spacing of pyrophospha te in first coating layer (run) | Angle of pyrophospha te of first coating layer (°) | Lattice spacing of phosphat e in first coating layer (run) | Angle of phosphat e of first coating layer (°) | Lattic e chang e rate (%) | Li/Mn antisite defect concentration/ % | Surfac e oxyge n valenc e state | Capacit y of button battery at 0.1C (mAh/g ) | Average discharg e voltage of button battery (V) | Expansio n of cell when stored at 60°C for 30 d (%) | Numbe r of cycles for capacit y retentio n rate of 80% at 45°C |
|---|---|---|---|---|---|---|---|---|---|---|---|---|---|---|---|---|
| Example 4-1 | 1:3 | 100 | 4 | 700 | 6 | 0.303 | 29.496 | 0.348 | 25.562 | 2.9 | 0.6 | -1.97 | 155.4 | 3.71 | 3.4 | 1183 |
| Example 4-2 | 1:3 | 150 | 6 | 700 | 6 | 0.303 | 29.496 | 0.348 | 25.562 | 2.6 | 0.6 | -1.98 | 157.8 | 3.78 | 2.4 | 1347 |
| Example 4-3 | 1:3 | 200 | 6 | 700 | 6 | 0.303 | 29.496 | 0.348 | 25.562 | 2.7 | 0.6 | -1.98 | 156.5 | 3.73 | 3.1 | 1277 |
| Example 4-4 | 1:3 | 200 | 6 | 600 | 6 | 0.303 | 29.496 | 0.348 | 25.562 | 2.9 | 1.1 | -1.95 | 153.8 | 3.69 | 3.9 | 984 |
| Example 4-5 | 1 : 1 | 150 | 6 | 600 | 4 | 0.303 | 29.496 | 0.348 | 25.562 | 2.8 | 1.2 | -1.94 | 155.5 | 3.71 | 3.5 | 895 |
| Example 4-6 | 1 : 1 | 150 | 6 | 600 | 6 | 0.303 | 29.496 | 0.348 | 25.562 | 2.6 | 0.8 | -1.95 | 156.3 | 3.72 | 3.1 | 963 |
| Example 4-7 | 1 : 1 | 150 | 6 | 800 | 8 | 0.303 | 29.496 | 0.348 | 25.562 | 2.5 | 0.4 | -1.97 | 156.9 | 3.74 | 2.7 | 1043 |
| Comparati ve example 8 | 1:3 | 80 | 3 | 400 | 3 | - | - | - | - | 3.9 | 1.8 | -1.91 | 148.0 | 3.67 | 9.4 | 779 |
| Comparati ve example 9 | 1 : 1 | 80 | 3 | 400 | 3 | - | - | - | - | 3.6 | 1.6 | -1.93 | 149.4 | 3.70 | 6.8 | 683 |
| Comparati ve example 10 | Only Li₂FeP₂ O7 | 80 | 3 | 350 | 2 | - | - | - | - | 3.7 | 1.7 | -1.86 | 147.5 | 3.68 | 11.5 | 385 |
| Comparati ve example 11 | Only LiFePO₄ | 80 | 3 | - | - | - | - | - | - | 3.4 | 1.4 | -1.93 | 150.3 | 3.72 | 4.7 | 526 |

It can be seen from Table 6 that when preparing lithium iron pyrophosphate by the method of the present application, by adjusting the drying temperature/time and the sintering temperature/time during the preparation process, the performance of the obtained material can be improved, thereby improving the battery performance. From comparative examples 8-11, it can be seen that when the drying temperature in the preparation process of lithium iron pyrophosphate is lower than 100°C or the temperature in the sintering step is lower than 400°C, Li₂FeP₂O₇, which is expected to be prepared in the present application, will not be obtained, thereby failing to improve the material properties as well as the performance of the battery comprising the obtained material.

### Test of battery

The secondary battery prepared from the positive electrode plates P2-P48 is tested as follows:
(1) according to the method in the national standard GB 38031-2020 "Electric vehicles traction battery safety requirements", the energy density of the secondary battery is determined;
(2) according to the national standard GBT31486-2015 "Electrical performance requirements and test methods for traction battery of electric vehicle", the discharge capacity retention rate at a low temperature of -20°C of the secondary battery is determined (charging and discharging cycle twice) to obtain the kinetic data of the battery;
(3) according to the standard cycle test method in the national standard GBT31484-2015 "Cycle life requirements and test methods for traction battery of electric vehicle", the normal-temperature cycle life of the secondary battery with 80% SOH is tested;
(4) referring to the standard cycle test method in the national standard GBT31484-2015 "Cycle life requirements and test methods for traction battery of electric vehicle", the temperature during the test process is adjusted to -10°C, the charging and discharging current is adjusted to 0.33C, the rest of the conditions is kept unchanged, and then the low-temperature cycle life of the secondary battery with 80% SOH is tested; and
(5) referring to the national standard GBT31486-2015 "Electrical performance requirements and test methods for traction battery of electric vehicle", the specific power data of the secondary battery with 20% SOC are determined; and the detailed steps are as follows:
   a) charging according to the method 6.3.4 in the national standard GBT31486-2015;
   b) at room temperature, the secondary battery being discharged at a current of 1C for 48 min, then discharged at the specified maximum discharge current for 10 s, then allowed to stand for 30 min, and then charged with the specified maximum charge current for 10 s; and
   c) calculating the specific power (W/kg) of the cell by dividing the discharge energy of 10 s charging and discharging by the 10 s charging and discharging time.

The above results are shown in Table 7.

**Table 7 Results of battery test**

| Electrode plate for battery | Energy density (Wh/L) | | Energy density (Wh/kg) | | Discharge capacity retention rate at 0.33C at 20°C | Specific power capacity (25°C, 20% SOC 10S) (W/kg) | Cycle life, Cycles (80% SOH, 25°C) | Cycle life, Cycles (80% SOH, - 10°C) |
|---|---|---|---|---|---|---|---|---|
| Positive electrode plate P2 | 418.1 | Base | 186.3 | Base | 38% | 1055 | 3500 | 300 |
| Positive electrode plate P3 | 457.6 | 9.45% | 203.9 | 9.45% | 57% | 1201 | 3600 | 640 |
| Positive electrode plate P4 | 457.6 | 9.45% | 203.9 | 9.45% | 56% | 1561 | 3589 | 656 |
| Positive electrode plate P5 | 473.3 | 13.20% | 210.8 | 13.15% | 63% | 1694 | 3559 | 724 |
| Positive electrode plate P6 | 442.9 | 5.93% | 197.2 | 5.85% | 47% | 1383 | 3502 | 410 |
| Positive electrode plate P7 | 457.6 | 9.45% | 203.9 | 9.45% | 54% | 1608 | 3599 | 651 |
| Positive electrode plate P8 | 457.6 | 9.45% | 203.9 | 9.45% | 52% | 1345 | 3504 | 527 |
| Positive electrode plate P9 | 473.3 | 13.20% | 210.8 | 13.15% | 67% | 1787 | 3847 | 731 |
| Positive electrode plate P10 | 473.3 | 13.20% | 210.8 | 13.15% | 67% | 1741 | 3807 | 755 |
| Positive electrode plate P11 | 442.9 | 5.93% | 197.2 | 5.85% | 50% | 1501 | 3796 | 618 |
| Positive electrode plate P12 | 442.9 | 5.93% | 197.2 | 5.85% | 45% | 1538 | 3848 | 704 |
| Positive electrode plate P13 | 473.3 | 13.20% | 210.8 | 13.15% | 66% | 1687 | 3463 | 750 |
| Positive electrode plate P14 | 442.9 | 5.93% | 197.2 | 5.85% | 45% | 1359 | 3813 | 417 |
| Positive electrode plate P15 | 457.6 | 9.45% | 203.9 | 9.45% | 53% | 1626 | 3696 | 635 |
| Positive electrode plate P16 | 473.3 | 13.20% | 210.8 | 13.15% | 62% | 1438 | 3439 | 581 |
| Positive electrode plate P17 | 442.9 | 5.93% | 197.2 | 5.85% | 48% | 1266 | 3789 | 338 |
| Positive electrode plate P18 | 457.6 | 9.45% | 203.9 | 9.45% | 56% | 1434 | 3583 | 533 |
| Positive electrode plate P19 | 482.3 | 15.36% | 214.3 | 15.03% | 69% | 1681 | 3459 | 762 |
| Positive electrode plate P20 | 450.8 | 7.82% | 200.6 | 7.68% | 50% | 1329 | 3624 | 619 |
| Positive electrode plate P21 | 466.7 | 11.62% | 207.6 | 11.43% | 55% | 1643 | 3549 | 661 |
| Positive electrode plate P22 | 482.3 | 15.36% | 214.3 | 15.03% | 72% | 1733 | 3842 | 739 |
| Positive electrode plate P23 | 450.8 | 7.82% | 200.6 | 7.68% | 52% | 1334 | 3469 | 610 |
| Positive electrode plate P24 | 466.7 | 11.62% | 207.6 | 11.43% | 55% | 1557 | 3656 | 607 |
| Positive electrode plate P25 | 466.7 | 11.62% | 207.6 | 11.43% | 55% | 1630 | 3409 | 646 |
| Positive electrode plate P26 | 430.1 | 2.87% | 192 | 3.06% | 42% | 1226 | 3921 | 526 |
| Positive electrode plate P27 | 450.8 | 7.82% | 200.6 | 7.68% | 47% | 1465 | 3810 | 552 |
| Positive electrode plate P28 | 466.7 | 11.62% | 207.6 | 11.43% | 56% | 1642 | 3523 | 659 |
| Positive electrode plate P29 | 430.1 | 2.87% | 192 | 3.06% | 43% | 1315 | 3946 | 547 |
| Positive electrode plate P30 | 450.8 | 7.82% | 200.6 | 7.68% | 47% | 1536 | 3727 | 573 |
| Positive electrode plate P31 | 425 | 1.65% | 189 | 1.45% | 39% | 1058 | 3998 | 329 |
| Positive electrode plate P32 | 457.6 | 9.45% | 203.9 | 9.45% | 56% | 1629 | 3713 | 610 |
| Positive electrode plate P33 | 418.1 | 0.00% | 186.3 | 0.00% | 13% | 389 | 285 | 61 |
| Positive electrode plate P34 | 418.1 | 0.00% | 186.3 | 0.00% | 34% | 1049 | 3969 | 400 |
| Positive electrode plate P35 | 418.1 | 0.00% | 186.3 | 0.00% | 11% | 414 | 313 | 74 |
| Positive electrode plate P36 | 418.1 | 0.00% | 186.3 | 0.00% | 34% | 1150 | 4006 | 394 |
| Positive electrode plate P37 | 418.1 | 0.00% | 186.3 | 0.00% | 34% | 1008 | 3848 | 319 |
| Positive electrode plate P38 | 418.1 | 0.00% | 186.3 | 0.00% | 34% | 1031 | 3909 | 304 |
| Positive electrode plate P39 | 418.1 | 0.00% | 186.3 | 0.00% | 32% | 1040 | 4018 | 350 |
| Positive electrode plate P40 | 418.1 | 0.00% | 186.3 | 0.00% | 34% | 1023 | 3939 | 305 |
| Positive electrode plate P41 | 457.6 | 9.45% | 203.9 | 9.46% | 44% | 481 | 371 | 166 |
| Positive electrode plate P42 | 457.6 | 9.45% | 203.9 | 9.46% | 53% | 1304 | 3251 | 718 |
| Positive electrode plate P43 | 457.6 | 9.45% | 203.9 | 9.46% | 44% | 585 | 412 | 138 |
| Positive electrode plate P44 | 457.6 | 9.45% | 203.9 | 9.46% | 54% | 1300 | 3300 | 718 |
| Positive electrode plate P45 | 457.6 | 9.45% | 203.9 | 9.46% | 51% | 1346 | 3326 | 660 |
| Positive electrode plate P46 | 457.6 | 9.45% | 203.9 | 9.46% | 51% | 1367 | 3390 | 709 |
| Positive electrode plate P47 | 457.6 | 9.45% | 203.9 | 9.46% | 53% | 1387 | 3333 | 669 |
| Positive electrode plate P48 | 457.6 | 9.45% | 203.9 | 9.46% | 52% | 1394 | 3344 | 679 |

According to the above results, it can be seen that:
compared with the secondary battery using the positive electrode plate P2, the secondary battery using the positive electrode plates P3-P30 has higher energy density, higher low-temperature discharge capacity retention rate, higher specific power, and longer low-temperature cycle life, and the secondary battery using the positive electrode plates P3-P5, P7, P9-P12, P14-15, P17-18, P20-P22, P24 and P26-P30 has longer room-temperature cycle life;
compared with the secondary battery using the positive electrode plate P31, the secondary battery using the positive electrode plate P32 has higher energy density, higher low-temperature discharge capacity retention rate, higher specific power, and longer low-temperature cycle life;
the positive electrode plates P41-P48 comprise the first positive electrode active material and the second positive electrode active material, the positive electrode plates P33-P40 comprise only an equivalent amount of the corresponding second positive electrode active material, and compared with the positive electrode plate comprising only the second positive electrode active material, the secondary battery made of the positive electrode plate comprising the first positive electrode active material and the second positive electrode active material has higher energy density, higher low-temperature discharge capacity retention rate, higher specific power, and longer low-temperature cycle life; and
the above shows that the secondary battery made of the positive electrode plate of the present application has higher energy density, better kinetic performance, higher cell rate performance, longer low-temperature cycle life, higher low-temperature cycling capacity retention rate, and better safety.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode plate, comprising a positive electrode current collector and positive electrode film layers provided on at least one surface of the positive electrode current collector; wherein the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material;
the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from a range of -0.100-0.100;
y is selected from a range of 0.001-0.500;
z is selected from a range of 0.001-0.100; and
M and X independently comprise one or more elements selected from Li, Fe, Ni, Mg, Co, Cu, Zn, Ti, Ag, Zr, Nb and Al; and
the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

2. A positive electrode plate, comprising a positive electrode current collector and positive electrode film layers provided on at least one surface of the positive electrode current collector; wherein at least one of the positive electrode film layers has a multi-layer structure, and any of the positive electrode film layers having a multi-layer structure comprises in different layers a first positive electrode active material having a core-shell structure and a second positive electrode active material, respectively;
the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from a range of -0.100-0.100;
y is selected from a range of 0.001-0.500;
z is selected from a range of 0.001-0.100; and
M and X independently comprise one or more elements selected from Li, Fe, Ni, Mg, Co, Cu, Zn, Ti, Ag, Zr, Nb and Al; and
the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1; and
optionally, any of the positive electrode film layers having a multi-layer structure comprises in adjacent layers the first positive electrode active material and the second positive electrode active material, respectively.

3. A positive electrode plate, comprising a positive electrode current collector and a positive electrode film layer A and a positive electrode film layer B provided on the two surfaces of the positive electrode current collector, respectively; the positive electrode film layer A and the positive electrode film layer B each independently have a single-layer structure or a multi-layer structure; at least one layer of the positive electrode film layer A comprises a first positive electrode active material having a core-shell structure, and at the same time, at least one layer of the positive electrode film layer B comprises a second positive electrode active material;
the first positive electrode active material comprises an inner core, a first coating layer coating the inner core, and a second coating layer coating the first coating layer; wherein the inner core comprises Li₁₊ₓMn_{1-y}A_{y}P_{1-z}R_{z}O₄, the first coating layer comprises pyrophosphate MP₂O₇ and phosphate XPO₄, and the second coating layer comprises a carbon element;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from a range of -0.100-0.100;
y is selected from a range of 0.001-0.500;
z is selected from a range of 0.001-0.100; and
M and X independently comprise one or more elements selected from Li, Fe, Ni, Mg, Co, Cu, Zn, Ti, Ag, Zr, Nb and Al; and
the second positive electrode active material is one or more selected from LiFePO₄, carbon-coated LiFePO₄, LiFe_{b}D_{c}PO₄ and carbon-coated LiFe_{b}D_{c}PO₄, wherein D independently comprises one or more elements selected from Ti, Zn, Co, Mn, La, V, Mg, Al, Nb, W, Zr, Nb, Sm, Cr, Cu and B, b is independently selected from the range of 0.99 to 0.999, and b + c = 1.

4. The positive electrode plate according to any one of claims 1 to 3, wherein in the second positive electrode active material,
the mass of carbon accounts for 0.1% - 4% of the mass of the carbon-coated LiFePO₄; and/or
the mass of carbon accounts for 0.1% - 4% of the mass of the carbon-coated LiFe_{b}D_{c}PO₄.

5. The positive electrode plate according to any one of claims 1 to 4, wherein the mass ratio of the first positive electrode active material to the second positive electrode active material is 1 : 7 - 7 : 1, optionally 1 : 4 - 4 : 1.

6. The positive electrode plate according to any one of claims 1 to 5, wherein in the first positive electrode active material,
A comprises one or more elements selected from Zn, Fe, Ti, V, Ni, Co and Mg, and optionally, A comprises at least two elements selected from Fe, Ti, V, Ni, Co and Mg; and/or
x is selected from a range of -0.100-0.006; and/or
y is selected from a range of 0.1-0.4; and/or
M and X independently comprise one or more elements selected from Li and Fe; and/or
the ratio of the y to 1-y is selected from 1 : 10 to 10 : 1, optionally 1 : 4 to 1 : 1; and/or
the ratio of the z to 1-z is selected from 1 : 999 to 1 : 9, optionally 1 : 499 to 1 : 249.

7. The positive electrode plate according to any one of claims 1 to 6, wherein in the first positive electrode active material, the first coating layer has an interplanar spacing of the phosphate of 0.345-0.358 nm, and an angle of the crystal direction (111) of 24.25° - 26.45°; and the first coating layer has an interplanar spacing of the pyrophosphate of 0.293-0.326 nm, and an angle of the crystal direction (111) of 26.41° - 32.57°.

8. The positive electrode plate according to any one of claims 1 to 7, wherein in the first positive electrode active material, the coating amount of the first coating layer is greater than 0 wt% and less than or equal to 7 wt%, optionally 4-5.6 wt%, based on the weight of the inner core.

9. The positive electrode plate according to any one of claims 1 to 8, wherein in the first positive electrode active material, the weight ratio of the pyrophosphate to phosphate in the first coating layer is 1 : 3 to 3 : 1, optionally 1 : 3 to 1 : 1.

10. The positive electrode plate according to any one of claims 1 to 9, wherein in the first positive electrode active material, the pyrophosphate and the phosphate each independently have a crystallinity of 10% to 100%, optionally 50% to 100%.

11. The positive electrode plate according to any one of claims 1 to 10, wherein in the first positive electrode active material, the coating amount of the second coating layer is greater than 0 wt% and less than or equal to 6 wt%, optionally 3-5 wt%, based on the weight of the inner core.

12. The positive electrode plate according to any one of claims 1 to 11, wherein the Li/Mn antisite defect concentration of the first positive electrode active material is 4% or less, optionally 2% or less.

13. The positive electrode plate according to any one of claims 1 to 12, wherein the lattice change rate of the first positive electrode active material is 6% or less, optionally 4% or less.

14. The positive electrode plate according to any one of claims 1 to 13, wherein the surface oxygen valence state of the first positive electrode active material is -1.88 or less, optionally -1.98 to -1.88.

15. The positive electrode plate according to any one of claims 1 to 14, wherein the compacted density of the first positive electrode active material under 3 tons (T) is 2.0 g/cm³ or more, optionally 2.2 g/cm³ or more.

16. The positive electrode plate according to any one of claims 1 to 15, wherein the sum of the mass of the first positive electrode active material and the second positive electrode active material accounts for 88% - 98.7% of the mass of the positive electrode plate.

17. A secondary battery, comprising a positive electrode plate according to any one of claims 1-16.

18. A battery module, comprising a secondary battery according to claim 17.

19. A battery pack, comprising a battery module according to claim 18.

20. A power consuming device, comprising at least one selected from a secondary battery according to claim 17, a battery module according to claim 18, and a battery pack according to claim 19.
